# EUROPÄISCHE PATENTSCHRIFT

(11) **EP 3 039 052 B1**
(45) Veröffentlichungstag und Bekanntmachung des Hinweises auf die Patenterteilung: **03.05.2017**
(21) Anmeldenummer: 14744028.3
(22) Anmeldetag: 21.07.2014
(51) Int. Cl.: C08G 63/553, C08G 63/685, C09D 167/08, C08G 69/44, C08G 63/60

(54) **DIMERFETTSÄURE-POLYESTERDIOL-REAKTIONSPRODUKT UND DESSEN EINSATZ IN BESCHICHTUNGSMITTELN**
POLYESTER DIOL DIMER FATTY ACID REACTION PRODUCT AND ITS USE IN COATING COMPOSITIONS
RÉACTIF DE POLYESTERDIOL D'ACIDES GRAS DIMÈRES ET SON UTILISATION DANS DES PRODUITS DE REVÊTEMENT

(30) Priorität: 28.08.2013 EP 13182100; 17.12.2013 EP 13197872
(43) Veröffentlichungstag der Anmeldung: 06.07.2016
(73) Patentinhaber: BASF Coatings GmbH, 48165 Münster (DE)
(72) Erfinder: STEINMETZ, Bernhard, 97535 Rütschenhausen (DE); REUTER, Hardy, 48167 Münster (DE); HOFFMANN, Peter, 48308 Senden (DE)
(74) Vertreter: BASF IP Association
(86) Internationale Anmeldenummer: PCT/EP2014/065593
(87) Internationale Veröffentlichungsnummer: WO 2015/028201

(56) Entgegenhaltungen:
- DE-A1- 4 009 858

## Beschreibung

Die Erfindung betrifft ein neuartiges Dimerfettsäure-Polyesterdiol-Reaktionsprodukt. Sie betrifft ferner einen pigmentierten wässrigen Basislack, welcher dieses Reaktionsprodukt enthält sowie die Verwendung des besagten Reaktionsprodukts in pigmentierten wässrigen Basislacken. Sie betrifft ferner ein Verfahren zur Herstellung von Mehrschichtlackierungen sowie die mit Hilfe des besagten Verfahrens herstellbaren Mehrschichtlackierungen. Zudem betrifft die vorliegende Erfindung die Reparatur von Fehlstellen auf Mehrschichtlackierungen.

Aus dem Stand der Technik ist eine Vielzahl von Verfahren zur Herstellung von farbund/oder effektgebenden mehrschichtigen Lackierungen bekannt. Aus dem Stand der Technik (vgl. z.B. die deutsche Patentanmeldung DE 199 48 004 A1, Seite 17, Zeile 37, bis Seite 19, Zeile 22, oder das deutsche Patent DE 100 43 405 C1, Spalte 3, Absatz [0018], und Spalte 8, Absatz [0052], bis Spalte 9, Absatz [0057], in Verbindung mit Spalte 6, Absatz [0039], bis Spalte 8, Absatz [0050]) ist das folgende Verfahren bekannt, bei dem
(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird.

Dieses Verfahren wird beispielsweise in großem Umfang sowohl für die Erstlackierung (OEM) von Automobilen sowie zur Lackierung von Metall- und Kunststoffanbauteilen eingesetzt. Dabei treten unter bestimmten Bedingungen Haftungsprobleme, insbesondere zwischen Basislack und Klarlack auf. Zudem wird das Verfahren auch für die Automobilreparaturlackierung von Automobilkarossen eingesetzt. Hier ist sowohl die OEM-Automobilreparaturlackierung als auch die Automobilreparaturlackierung gemeint, welche beispielsweise in einer Werkstatt stattfindet. Dabei ist vor allem die Haftung zwischen dem bei der Reparaturlackierung eingesetzten Basislack und der Erstlackierung problematisch.

Der vorliegenden Erfindung lag also die Aufgabe zugrunde, ein Reaktionsprodukt zur Verfügung zu stellen, mit Hilfe dessen sich Beschichtungen herstellen lassen, die die oben bezeichneten Nachteile des Standes der Technik nicht aufweisen. Hierunter ist eine Haftungsverbesserung sowohl bei der Lackierung von Metall- und Kunststoffsubstraten als auch bei der Autoreparaturlackierung zu verstehen. Bei der Lackierung von Metall- und Kunststoffsubstraten steht hier neben der Haftung des Basislacks auf dem Untergrund die Haftung zwischen Basislack und Klarlack im Vordergrund. Bei der Autoreparaturlackierung steht neben der Haftung zwischen Basislack und Klarlack die Haftung zwischen Basislack und Erstlackierung im Vordergrund. Diese soll vor allem für den Einsatz in der OEM-Automobilreparaturlackierung verbessert werden.

Die Haftungsproblematik ist insbesondere dann eklatant, wenn die beschichteten Substrate der Witterung ausgesetzt sind. Die Aufgabe der vorliegenden Erfindung bestand somit auch darin, Beschichtungen zur Verfügung zu stellen, die auch, nachdem sie der Witterung ausgesetzt waren, noch hervorragende Haftungseigenschaften besitzen.

Eine schlechte Haftung manifestiert sich im Falle einer Belastung durch Witterung besonders auch im Auftreten von Blasen und Quellungen. Eine weitere Aufgabe der vorliegenden Erfindung bestand ferner darin, das Auftreten von Blasen und Quellungen zu verhindern oder zu reduzieren.

Diese Aufgaben wurden überraschenderweise durch ein Dimerfettsäure-Polyesterdiol-Reaktionsprodukt gelöst, welches herstellbar ist durch Umsetzung von
(a) Dimerfettsäuren mit
(b) mindestens einem Polyesterdiolder allgemeinen Strukturformel (I) 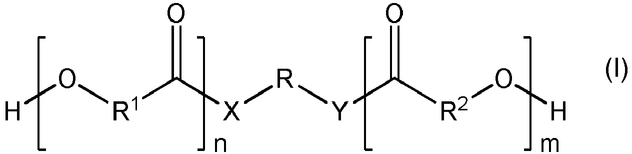 wobei
   R für einen divalenten organischen Rest umfassend 2 bis 10 Kohlenstoffatome steht,
   R¹und R² unabhängig voneinander für geradkettige oder verzweigte Alkylenreste mit 2 bis 10 Kohlenstoffatomen stehen,
   X und Y unabhängig voneinander für O, S oder NR³ stehen, worin R³ für Wasserstoff oder einen Alkylrest mit 1 bis 6 Kohlenstoffatomen steht, und
   m und n entsprechend so gewählt sind, dass das Polyesterdiol ein zahlenmittleres Molekulargewicht von 450 bis 2200 g/mol besitzt,
   wobei die Komponenten (a) und (b) in einem molaren Verhältnis von 0,7/2,3 bis 1,3/1,7 eingesetzt werden und das resultierende Dimerfettsäure-Polyesterdiol-Reaktionsprodukt ein zahlenmittleres Molekulargewicht von 1200 bis 5000 g/mol und eine Säurezahl < 10 mg KOH/g besitzt.

Die Bedingung, dass m und n so gewählt sind, dass das Polyesterdiol ein zahlenmittleres Molekulargewicht von 450 bis 2200 g/mol besitzt, sei wie folgt veranschaulicht. Handelt es sich beispielsweise bei R um einen Ethylenrest, bei X und Y um Sauerstoff und bei R¹ und R² jeweils um einen C₅-Alkylenrest und soll das zahlenmittlere Molekulargewicht etwa 1200 g/mol betragen, so liegt die Summe aus m und n bei etwa 10.

Das zahlenmittlere Molekulargewicht wird im Rahmen der vorliegenden Erfindung, sofern nicht spezifisch anders angegeben, mittels Dampfdruckosmose bestimmt. Gemessen wurde mittels eines Dampfdruckosmometers (Modell 10.00, Firma Knauer) an Konzentrationsreihen der zu untersuchenden Komponente in Toluol bei 50 °C mit Benzophenon als Eichsubstanz zur Bestimmung der experimentellen Eichkonstante des einzusetzenden Messgeräts (vergleiche auch E. Schröder, G. Müller, K.-F. Arndt, "Leitfaden der Polymercharakterisierung", Akademie-Verlag Berlin, S. 47 bis 54, 1982, wobei darin Benzil als Eichsubstanz eingesetzt wurde).

### Komponente (a):

Als Dimerfettsäuren (bekannt auch als dimerisierte Fettsäuren oder Dimersäuren) werden Gemische bezeichnet, die durch Oligomerisierung von ungesättigten Fettsäuren hergestellt werden. Als Ausgangsstoffe können ungesättigte C₁₂- bis C₂₂-Fettsäuren eingesetzt werden. Je nach Zahl und Lage der Doppelbindungen der zur Herstellung der Dimerfettsäuren verwendeten C₁₂- bis C₂₂-Fettsäuren, sind die Carboxylgruppen der Dimerfettsäuren durch Kohlenwasserstoffreste miteinander verbunden, die überwiegend 24 bis 44 Kohlenstoffatome aufweisen. Diese Kohlenwasserstoffreste sind üblicherweise verzweigt und können Doppelbindungen, C₆-cycloaliphatische Kohlenwasserstoffreste oder C₆-aromatische Kohlenwasserstoffreste aufweisen, die cycloaliphatischen Reste und/oder die aromatischen Reste können dabei auch kondensiert vorliegen. Vorzugsweise weisen die Reste, welche die Carboxylgruppen der Dimerfettsäuren verbinden keine aromatischen Kohlenwasserstoffreste auf, ganz besonders bevorzugt keine ungesättigten Bindungen und keine aromatischen Kohlenwasserstoffreste.

Im Sinne der vorliegenden Erfindung werden bevorzugt C₁₈-Fettsäuren eingesetzt. Besonders bevorzugt werden C₁₈-Fettsäuren und ganz besonders bevorzugt, Linolen-, Linol- und/oder Ölsäure eingesetzt.

In Abhängigkeit von der Reaktionsführung entsteht bei der oben bezeichneten Oligomerisierung ein Gemisch, das hauptsächlich dimere, aber auch trimere Moleküle sowie monomere Moleküle und sonstige Nebenprodukte enthält. Üblicherweise wird destillativ gereinigt. Handelsübliche Dimerfettsäuren enthalten im Allgemeinen mindestens 80 Gew.-% dimere Moleküle, bis zu 19 Gew.-% trimere Moleküle und maximal 1 Gew.-% monomerer Moleküle und sonstiger Nebenprodukte.

Im Sinne der vorliegenden Erfindung ist es bevorzugt, Dimerfettsäuren einzusetzen, die zu ≥ 90 Gew.-% aus dimeren Molekülen, ≤ 5 Gew.-% aus trimeren Molekülen und zu ≤ 5 Gew.-% aus monomeren Molekülen und sonstigen Nebenprodukten bestehen. Es ist besonders bevorzugt, Dimerfettsäuren einzusetzen, die zu 95 bis 98 Gew.-% aus dimeren Molekülen, weniger als 5 Gew.-% aus trimeren Molekülen und zu weniger als 1 Gew.-% aus monomeren Molekülen und sonstigen Nebenprodukten bestehen. Ebenfalls besonders bevorzugt werden Dimerfettsäuren eingesetzt, die zu ≥ 98 Gew.-% aus dimeren Molekülen, ≤ 1,5 Gew.-% aus trimeren Molekülen und zu ≤ 0,5 Gew.-% aus monomeren Molekülen und sonstigen Nebenprodukten bestehen.

Dimerfettsäuren enthalten je nach Reaktionsführung sowohl aliphatische als auch aromatische Molekülfragmente. Die aliphatischen Molekülfragmente lassen sich ferner aufteilen in lineare und cyclische, welche wiederum gesättigt oder ungesättigt sein können. Durch eine Hydrierung lassen sich die aromatischen sowie die ungesättigten aliphatischen Molekülfragmente in entsprechende gesättigte aliphatische Molekülfragmente umwandeln.

Besonders bevorzugt sind solche Dimerfettsäuren, die zu ≥ 98 Gew.-% aus dimeren Molekülen,≤ 1,5 Gew.-% aus trimeren Molekülen und ≤ als 0,5 Gew.-% aus monomeren Molekülen und sonstigen Nebenprodukten bestehen.

Als ganz besonders bevorzugt einzusetzende Dimerfettsäuren sind zu nennen Radiacid 0970, Radiacid 0971, Radiacid 0972, Radiacid 0975, Radiacid 0976 und Radiacid 0977 der Firma Oleon, Pripol 1006, Pripol 1009, Pripol 1012, und Pripol 1013 der Firma Unichema, Empol 1008, Empol 1061 und Empol 1062 der Firma Cognis sowie Unidyme 10 und Unidyme TI der Firma Arizona Chemical.

### Komponente (b):

Als Komponente (b) wird mindestens ein Polyesterdiol der allgemeinen Strukturformel (I) 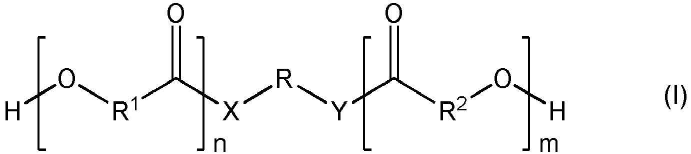 eingesetzt.

In Strukturformel (I) steht R für einen divalenten organischen Rest umfassend 2 bis 10 Kohlenstoffatome und vorzugsweise 2 bis 6 Kohlenstoffatome. Der Rest R kann beispielsweise aliphatisch, cycloaliphatisch, aromatisch oder araliphatisch und verzweigt oder unverzweigt sein. Der Rest R kann neben Kohlenstoffatomen und Wasserstoffatomen auch Heteroatome wie beispielsweise O oder N enthalten. Er kann gesättigt oder ungesättigt sein.

Vorzugsweise steht R für einen aliphatischen Rest mit 2 bis 10 Kohlenstoffatomen, besonders bevorzugt für einen aliphatischen Rest mit 2 bis 6 Kohlenstoffatomen und ganz besonders bevorzugt für einen aliphatischen Rest mit 2 bis 4 Kohlenstoffatomen. Beispielsweise steht der Rest R für C₂H₄, C₃H₆, C₄H₈ oder C₂H₄-O-C₂H₄.

R¹und R² stehen unabhängig voneinander für geradkettige oder verzweigte Alkylenreste mit 2 bis 10 Kohlenstoffatomen, vorzugsweise 2 bis 6 Kohlenstoffatomen und besonders bevorzugt 3 bis 5 Kohlenstoffatomen. Vorzugsweise enthalten diese Reste nur Kohlenstoff und Wasserstoff.

In dem erfindungsgemäß einzusetzenden Polyesterdiol können alle n Reste R¹ und alle m Reste R² gleich sein. Ebenso ist es aber auch möglich, das unterschiedliche Arten von Resten R¹ und R²im Polyesterdiol vorhanden sind. Bevorzugt sind alle Reste R¹ und R² gleich.

Bei R¹ und R² handelt es sich ganz besonders bevorzugt um einen C₄- oder einen C₅-Alkylenrest, insbesondere um einen Tetramethylen- oder Pentamethylenrest. In einer ganz besonders bevorzugten Ausführungsform der vorliegenden Erfindung stehen beide Reste R¹ und R² für Pentamethylenreste.

X und Y stehen unabhängig voneinander für O, S oder NR³, worin R³ für Wasserstoff oder einen Alkylrest mit 1 bis 6 Kohlenstoffatomen steht. Vorzugsweise stehen X und Y unabhängig voneinander für O oder NR³, besonders bevorzugt stehen diese unabhängig voneinander für O und NH, ganz besonders bevorzugt stehen X und Y für O.

Die Indizes m und n entsprechend so gewählt sind, dass das Polyesterdiol ein zahlenmittleres Molekulargewicht von 450 bis 2200 g/mol, vorzugsweise 500 bis 1400 g/mol, besonders bevorzugt 500 bis 1200 g/mol besitzt.

Die Polyesterpolyole der allgemeinen Strukturformel (I) lassen sich in einer ersten Route herstellen, indem Verbindungen HX-R-YH als sogenannte Starterverbindungen fungieren und durch Ringöffnungspolymerisation von Lactonen der Hydroxycarbonsäuren HO-R¹-COOH und HO-R²-COOH die hydroxyterminierten Polyesterketten an die Starterverbindung polymerisiert werden. Nach einer zweiten Route können natürlich auch zuerst alpha-Hydroxy-gamma-Carboxy-terminierte Polyester hergestellt werden, beispielsweise durch Ringöffnungspolymerisation von Lactonen der Hydroxycarbonsäuren HO-R¹-COOH und HO-R²-COOH oder durch Polykondensation der Hydroxycarbonsäuren HO-R¹-COOH und HO-R²-COOH. Die alpha-Hydroxy-gamma-Carboxy-terminierten Polyester können dann wiederum mit Verbindungen HX-R-YH mittels einer Kondensationsreaktion zu den erfindungsgemäß einzusetzenden Polyesterdiolen umgesetzt werden.

Entsprechende Verfahren sind beispielsweise in der Deutschen Offenlegungsschrift 2234265 "Hydroxylendständige Polylactone" des Anmelders Stamicarbon N.V. beschrieben.

Gleich welche der obigen Syntheserouten zur Herstellung der Verbindungen der allgemeinen Strukturformel (I) gewählt wird, eignen sich als Verbindungen HX-R-YH insbesondere Diole wie R(OH)₂, Aminoalkohole wie R(OH)(NH₂) und Diamine wie R(NH₂)₂, wobei R die oben angegebenen Bedeutungen besitzt. Ganz besonders bevorzugt steht darin R für einen aliphatischen Rest mit 2 bis 10 Kohlenstoffatomen, besonders bevorzugt für einen aliphatischen Rest mit 2 bis 6 Kohlenstoffatomen und ganz besonders bevorzugt für einen aliphatischen Rest mit 2 bis 4 Kohlenstoffatomen. Bevorzugte Reste R sind somit beispielsweise C₂H₄, C₃H₆, C₄H₈, C₂H₄-O-C₂H₄ oder C₂H₄-O-C₂H₄-O-C₂H₄. Als Verbindungen HX-R-YH lassen sich somit ganz besonders bevorzugt Ethylenglykol, 1,3- und 1,2-Propylenglykol, 1,4-Butylenglykol, Diethylenglykol oder Triethylenglykol einsetzen.

Als Hydroxycarbonsäuren HO-R¹-COOH und HO-R²-COOH oder deren Lactone werden ganz besonders bevorzugt 5-Hydroxypentansäure beziehungsweise delta-Valerolacton und 6-Hydroxyhexansäure beziehungsweise epsilon-Caprolacton eingesetzt. Werden sollen die erfindungsgemäß einzusetzenden Polyesterdiole und die daraus hergestellten erfindungsgemäßen Dimerfettsäure-Polyesterdiol-Reaktionsprodukte eine besonders niedrige Kristallisationsneigung besitzen, so empfiehlt sich der Einsatz von Mischungen mindestens zweier verschiedener Hydroxycarbonsäuren oder der korrespondierenden Lactone.

Die Herstellung des erfindungsgemäßen Dimerfettsäure-Polyesterdiol-Reaktionsprodukts weist keine Besonderheiten auf. Üblicherweise erfolgt die Veresterung mit Hilfe eines Wasserabscheiders. Dabei werden die Komponenten (a) und (b) in einem molaren Verhältnis von 0,7/2,3 bis 1,3/1,7, bevorzugt von 0,8/2,2 bis 1,2/1,8 und ganz besonders bevorzugt von 0,9/2,1 bis 1,1/1,9 eingesetzt. Die Reaktion wird abgebrochen, wenn das erfindungsgemäße Dimerfettsäure-Polyesterdiol-Reaktionsprodukt eine Säurezahl von < 10 mg KOH/g besitzt. Bevorzugt besitzt es eine Säurezahl von < 7,5 mg KOH/g und ganz besonders bevorzugt von < 5 mg KOH/g. Die Säurezahl wird dabei mittels der DIN 53402 bestimmt.

Das resultierende Dimerfettsäure-Polyesterdiol-Reaktionsprodukt besitzt ein zahlenmittleres Molekulargewicht Mₙ von 1200 bis 5000 g/mol, bevorzugt 1200 bis 4500 g/mol. Ganz besonders bevorzugt ist eine Untergrenze des zahlenmittleren Molekulargewichts von 1300 oder 1400 g/mol, für alle Ausführungsformen der Erfindung.

Die erfindungsgemäßen Dimerfettsäure-Polyesterdiol-Reaktionsprodukte besitzen eine geringe Wasserlöslichkeit. Werden Sie in wässrigen Systemen eingesetzt, so reichern sie sich aufgrund ihrer Unverträglichkeit an den Grenzflächen an und sind somit in der Lage zu einer Verbesserung der Haftung zu angrenzenden Schichten beizutragen.

Wenn ein zahlenmittleres Molekulargewicht von 5000 g/mol überschritten wird, so kann die Löslichkeit der erfindungsgemäßen Dimerfettsäure-Polyesterdiol-Reaktionsprodukte in wässrigen Systemen derart gering sein, dass sie zur Kristallisation neigen und ausfallen können. Dem kann jedoch in gewissen Grenzen entgegengewirkt werden, wenn bei der Herstellung des Polyesterdiols mindestens zwei verschiedene Hydroxycarbonsäuren oder deren Lactone eingesetzt werden. Derartige Unregelmäßigkeiten im Aufbau der Polyesterketten des Polyesterdiol führen in der Regel zu Produkten mit geringerer Kristallisationsneigung. Wird ein zahlenmittleres Molekulargewicht von 1200 g/mol unterschritten, so kann sich die Wasserlöslichkeit des besagten Dimerfettsäure-Polyesterdiol-Reaktionsprodukts derart erhöhen, dass es sich nicht mehr in ausreichender Konzentration an den Grenzflächen anreichern kann. Eine Haftungsverbesserung lässt sich dann nicht mehr erzielen.

Besonders bevorzugte Ausführungsformen werden im Folgenden genannt:
a) In einer besonders bevorzugten Ausführungsform des erfindungsgemäßen Dimerfettsäure-Polyesterdiol-Reaktionsprodukts wird die Dimerfettsäure aus Linolen-, Linol- und/oder Ölsäure hergestellt, besteht zu mindestens 98 Gew.-% aus dimeren Molekülen, weniger als 1,5 Gew.-% aus trimeren Molekülen und zu weniger als 0,5 Gew.-% aus monomeren Molekülen und sonstigen Nebenprodukten.
b) In einer weiteren besonders bevorzugten Ausführungsform des erfindungsgemäßen Dimerfettsäure-Polyesterdiol-Reaktionsprodukts handelt es sich bei dem erfindungsgemäß einzusetzenden Polyesterdiol um Polycaprolactondiol mit einem zahlenmittleren Molekulargewicht von 400 bis 1200 g/mol.
c) In einer weiteren besonders bevorzugten Ausführungsform des erfindungsgemäßen Dimerfettsäure-Polyesterdiol-Reaktionsprodukts werden die Komponenten (a) und (b) in einem molaren Verhältnis von 0,9/2,1 bis 1,1/1,9 eingesetzt.
d) In einer weiteren besonders bevorzugten Ausführungsform des erfindungsgemäßen Dimerfettsäure-Polyesterdiol-Reaktionsprodukts besitzt dieses eine Säurezahl von < 5 mg KOH/g.
e) In einer weiteren besonders bevorzugten Ausführungsform des erfindungsgemäßen Dimerfettsäure-Polyesterdiol-Reaktionsprodukts besitzt dieses ein zahlenmittleres Molekulargewicht von 1200 bis 4500 g/mol.

In einer ganz besonders bevorzugten Ausführungsform des erfindungsgemäßen Dimerfettsäure-Polyesterdiol-Reaktionsprodukts sind alle unter a) bis e) angegebenen Merkmale in Kombination realisiert.

Die vorliegende Erfindung betrifft ferner einen pigmentierten wässrigen Basislack, welcher mindestens ein erfindungsgemäßes Dimerfettsäure-Polyesterdiol-Reaktionsprodukt enthält.

Der erfindungsgemäße Basislack ist wässrig. Der Ausdruck "wässrig" ist dem Fachmann in diesem Zusammenhang bekannt. Gemeint ist grundsätzlich ein Basislack, der nicht ausschließlich auf organischen Lösemitteln basiert, das heißt nicht ausschließlich als Lösemittel solche auf organischer Basis enthält, sondern der im Gegenteil als Lösemittel einen signifikanten Anteil Wasser enthält. Bevorzugt ist "wässrig" im Rahmen der vorliegenden Erfindung so zu verstehen, dass das jeweilige Beschichtungsmittel, insbesondere der Basislack, einen Anteil von mindestens 40 Gew.-%, bevorzugt mindestens 50 Gew.-%, ganz besonders bevorzugt mindestens 60 Gew.-% Wasser, jeweils bezogen auf die Gesamtmenge der enthaltenen Lösemittel (das heißt Wasser und organische Lösemittel), aufweist. Darunter bevorzugt beträgt der Anteil an Wasser 40 bis 90 Gew.-%, insbesondere 50 bis 80 Gew.-%, ganz besonders bevorzugt 60 bis 75 Gew.-%, jeweils bezogen auf die Gesamtmenge der enthaltenen Lösemittel.

Unter einem Basislack ist ein in der Automobil-Lackierung und allgemeinen Industrielackierung eingesetzter farbgebender Zwischenbeschichtungsstoff zu verstehen. Dieser wird im Allgemeinen auf einem mit Füller oder Grundierfüller vorbehandelten Metall- oder Kunststoffuntergrund, mitunter auch direkt auf dem Kunststoffuntergrund aufgebracht. Auch Altlackierungen, welche gegebenenfalls noch vorbehandelt werden müssen (beispielsweise durch Anschleifen), können als Untergründe dienen. Mittlerweile ist es durchaus üblich, mehr als eine Basislackschicht aufzutragen. Dementsprechend stellt in einem solchen Fall eine erste Basislackschicht den Untergrund für eine zweite dar. Um eine Basislackschicht insbesondere gegen Umwelteinflüsse zu schützen, wird auf dieser üblicherweise mindestens noch eine zusätzliche Klarlackschicht appliziert.

Die Summe über die gewichtsprozentualen Anteile, bezogen auf das Gesamtgewicht des pigmentierten wässrigen Basislacks, aller erfindungsgemäßen Dimerfettsäure-Polyesterdiol-Reaktionsprodukte beträgt bevorzugt 0,1 bis 30 Gew.-%, besonders bevorzugt 1 bis 20 Gew.-% und ganz besonders bevorzugt 1,5 bis 15 Gew.-% oder sogar 2 bis 12 Gew.-%.

Liegt der Gehalt des erfindungsgemäßen Dimerfettsäure-Polyesterdiol-Reaktionsprodukts unter 0,1 Gew.-% so ist es gegebenenfalls möglich, dass keine Verbesserung der Haftung mehr erzielt wird. Liegt der Gehalt bei mehr als 30 Gew.-% so können Nachteile auftreten, wie zum Beispiel eine Inkompatibilität des besagten Dimerfettsäure-Polyesterdiol-Reaktionsprodukts im Basislack. Eine solche Inkompatibilität kann sich beispielsweise durch ungleichmäßigen Verlauf sowie durch Ausschwimmen oder Absetzen zeigen.

Wie oben bereits beschrieben, ist das erfindungsgemäße Dimerfettsäure-Polyesterdiol-Reaktionsprodukt in wässrigen Systemen schwer löslich. Es wird daher bevorzugt direkt bei der Herstellung des pigmentieren wässrigen Basislacks eingesetzt und nicht erst nach erfolgter Herstellung in den ansonsten fertigen Basislack hinzugegeben.

In einer bevorzugten Ausführungsform beträgt die Summe über die gewichtsprozentualen Anteile aller erfindungsgemäßen Dimerfettsäure-Polyesterdiol-Reaktionsprodukte 0,1 bis 30 Gew.-% bezogen auf das Gesamtgewicht des pigmentierten wässrigen Basislacks. Für den Fall, dass bevorzugte Ausführungsformen der erfindungsgemäßen Dimerfettsäure-Polyesterdiol-Reaktionsprodukte eingesetzt werden, beträgt die Summe über die gewichtsprozentualen Anteile aller bevorzugten Ausführungsformen der erfindungsgemäßen Dimerfettsäure-Polyesterdiol-Reaktionsprodukte bevorzugt ebenfalls 0,1 bis 30 Gew.-% bezogen auf das Gesamtgewicht des pigmentierten wässrigen Basislacks. Besonders bevorzugt enthält der pigmentierte wässrige Basislack als erfindungsgemäße Dimerfettsäure-Polyesterdiol-Reaktionsprodukte ausschließlich bevorzugte Ausführungsformen der erfindungsgemäßen Dimerfettsäure-Polyesterdiol-Reaktionsprodukte.

In einer bevorzugten Ausführungsform beträgt die Summe über die gewichtsprozentualen Anteile aller erfindungsgemäßen Dimerfettsäure-Polyesterdiol-Reaktionsprodukte 1 bis 20 Gew.-% bezogen auf das Gesamtgewicht des pigmentierten wässrigen Basislacks. Für den Fall, dass bevorzugte Ausführungsformen der erfindungsgemäßen Dimerfettsäure-Polyesterdiol-Reaktionsprodukte eingesetzt werden, beträgt die Summe über die gewichtsprozentualen Anteile aller bevorzugten Ausführungsformen der erfindungsgemäßen Dimerfettsäure-Polyesterdiol-Reaktionsprodukte bevorzugt ebenfalls 1 bis 20 Gew.-% bezogen auf das Gesamtgewicht des pigmentierten wässrigen Basislacks. Besonders bevorzugt enthält der pigmentierte wässrige Basislack als erfindungsgemäße Dimerfettsäure-Polyesterdiol-Reaktionsprodukte ausschließlich bevorzugte Ausführungsformen der erfindungsgemäßen Dimerfettsäure-Polyesterdiol-Reaktionsprodukte.

In einer ganz besonders bevorzugten Ausführungsform beträgt die Summe über die gewichtsprozentualen Anteile aller erfindungsgemäßen Dimerfettsäure-Polyesterdiol-Reaktionsprodukte 1,5 bis 15 Gew.-% bezogen auf das Gesamtgewicht des pigmentierten wässrigen Basislacks. Für den Fall, dass bevorzugte Ausführungsformen der erfindungsgemäßen Dimerfettsäure-Polyesterdiol-Reaktionsprodukte eingesetzt werden, beträgt die Summe über die gewichtsprozentualen Anteile aller bevorzugten Ausführungsformen der erfindungsgemäßen Dimerfettsäure-Polyesterdiol-Reaktionsprodukte bevorzugt ebenfalls 1,5 bis 15 Gew.-% bezogen auf das Gesamtgewicht des pigmentierten wässrigen Basislacks. Besonders bevorzugt enthält der pigmentierte wässrige Basislack als erfindungsgemäße Dimerfettsäure-Polyesterdiol-Reaktionsprodukte ausschließlich bevorzugte Ausführungsformen der erfindungsgemäßen Dimerfettsäure-Polyesterdiol-Reaktionsprodukte.

In einer ebenfalls ganz besonders bevorzugten Ausführungsform beträgt die Summe über die gewichtsprozentualen Anteile aller erfindungsgemäßen Dimerfettsäure-Polyesterdiol-Reaktionsprodukte 2 bis 12 Gew.-% bezogen auf das Gesamtgewicht des pigmentierten wässrigen Basislacks. Für den Fall, dass bevorzugte Ausführungsformen der erfindungsgemäßen Dimerfettsäure-Polyesterdiol-Reaktionsprodukte eingesetzt werden, beträgt die Summe über die gewichtsprozentualen Anteile aller bevorzugten Ausführungsformen der erfindungsgemäßen Dimerfettsäure-Polyesterdiol-Reaktionsprodukte bevorzugt ebenfalls 2 bis 12 Gew.-% bezogen auf das Gesamtgewicht des pigmentierten wässrigen Basislacks. Besonders bevorzugt enthält der pigmentierte wässrige Basislack als erfindungsgemäße Dimerfettsäure-Polyesterdiol-Reaktionsprodukte ausschließlich bevorzugte Ausführungsformen der erfindungsgemäßen Dimerfettsäure-Polyesterdiol-Reaktionsprodukte.

Als Beispiele für in diesem Sinne bevorzugte Ausführungsformen der erfindungsgemäßen Dimerfettsäure-Polyesterdiol-Reaktionsprodukte seien die folgenden besonders bevorzugten Ausführungsformen genannt:
a) In einer besonders bevorzugten Ausführungsform des erfindungsgemäßen Dimerfettsäure-Polyesterdiol-Reaktionsprodukts wird die Dimerfettsäure aus Linolen-, Linol- und/oder Ölsäure hergestellt, besteht zu mindestens 98 Gew.-% aus dimeren Molekülen, weniger als 1,5 Gew.-% aus trimeren Molekülen und zu weniger als 0,5 Gew.-% aus monomeren Molekülen und sonstigen Nebenprodukten.
b) In einer weiteren besonders bevorzugten Ausführungsform des erfindungsgemäßen Dimerfettsäure-Polyesterdiol-Reaktionsprodukts handelt es sich bei dem erfindungsgemäß einzusetzenden Polyesterdiol um Polycaprolactondiol mit einem zahlenmittleren Molekulargewicht von 400 bis 1200g/mol.
c) In einer weiteren besonders bevorzugten Ausführungsform des erfindungsgemäßen Dimerfettsäure-Polyesterdiol-Reaktionsprodukts werden die Komponenten (a) und (b) in einem molaren Verhältnis von 0,9/2,1 bis 1,1/1,9 eingesetzt.
d) In einer weiteren besonders bevorzugten Ausführungsform des erfindungsgemäßen Dimerfettsäure-Polyesterdiol-Reaktionsprodukts besitzt dieses eine Säurezahl von < 5 mg KOH/g.
e) In einer weiteren besonders bevorzugten Ausführungsform des erfindungsgemäßen Dimerfettsäure-Polyesterdiol-Reaktionsprodukts besitzt dieses ein zahlenmittleres Molekulargewicht von 1200 bis 4500 g/mol.

Als weiteres Beispiel für in diesem Sinne bevorzugte Ausführungsformen der erfindungsgemäßen Dimerfettsäure-Polyesterdiol-Reaktionsprodukte seien jene genannt, welche alle die unter a) bis e) angegebenen Merkmale in Kombination realisieren.

Die erfindungsgemäß eingesetzten Basislacke enthalten farb- und/oder effektgebende Pigmente. Solche Farbpigmente und Effektpigmente sind dem Fachmann bekannt und werden beispielsweise in Römpp-Lexikon Lacke und Druckfarben, Georg Thieme Verlag, Stuttgart, New York, 1998, Seite 176 und 451, beschrieben. Der Anteil der Pigmente kann beispielsweise im Bereich von 1 bis 40 Gew.-%, bevorzugt 2 bis 30 Gew.-%, besonders bevorzugt 3 bis 25 Gew.-%, bezogen auf das Gesamtgewicht des pigmentierten wässrigen Basislacks, liegen.

Im Rahmen der vorliegenden Erfindung werden bevorzugt Basislacke eingesetzt, die als Bindemittel physikalisch, thermisch oder thermisch und mit aktinischer Strahlung härtbare Bindemittel enthalten. Als Bindemittel wird hierin entsprechend der einschlägigen DIN EN ISO 4618 der nichtflüchtige Anteil eines Beschichtungsstoffs ohne Pigmente und Füllstoffe verstanden. Spezielle Bindemittel sind in diesem Sinne somit beispielsweise auch Vernetzungsmittel und lacktypische Additive sowie alle anderen nichtflüchtigen Bestandteile, außer den Pigmenten und Füllstoffen, auch wenn im Folgenden der Begriff Bindemittel hauptsächlich in Bezug auf die Hauptbindemittelkomponente verwendet wird.

Neben dem erfindungsgemäßen Dimerfettsäure-Polyesterdiol-Reaktionsprodukt enthalten die erfindungsgemäßen pigmentierten wässrigen Basislacke besonders bevorzugt mindestens ein Polyurethanharz. Derartige Polyurethanharz enthaltende Lacke können ebenfalls üblicherweise physikalisch, thermisch oder thermisch und mit aktinischer Strahlung gehärtet werden.

Im Rahmen der vorliegenden Erfindung bedeutet der Begriff "physikalische Härtung" die Bildung eines Films durch Abgabe von Lösemittel aus Polymerlösungen oder Polymerdispersionen. Üblicherweise sind hierfür keine Vernetzungsmittel notwendig.

Im Rahmen der vorliegenden Erfindung bedeutet der Begriff "thermische Härtung" die durch Wärme initiierte Vernetzung einer Lackschicht, bei der in dem zugrunde liegenden Lack entweder ein separat vorliegendes Vernetzungsmittel oder aber selbstvernetzende Bindemittel angewandt werden. Das Vernetzungsmittel enthält reaktive funktionelle Gruppen, die zu den in den Bindemitteln vorhandenen reaktiven funktionellen Gruppen komplementär sind. Üblicherweise wird dies von der Fachwelt als Fremdvernetzung bezeichnet. Sind die komplementären reaktiven funktionellen Gruppen oder autoreaktiven funktionellen Gruppen, d.h. Gruppen, die mit Gruppen derselben Art reagieren, bereits in den Bindemittelmolekülen vorhanden, liegen selbstvernetzende Bindemittel vor. Beispiele geeigneter komplementärer reaktiver funktioneller Gruppen und autoreaktiver funktioneller Gruppen sind aus der deutschen Patentanmeldung DE 199 30 665 A1, Seite 7, Zeile 28 bis Seite 9, Zeilen 24 bekannt.

Im Rahmen der vorliegenden Erfindung ist unter aktinischer Strahlung elektromagnetische Strahlung wie nahes Infrarot (NIR), UV-Strahlung, insbesondere UV-Strahlung, und Korpuskularstrahlung wie Elektronenstrahlung zu verstehen. Die Härtung durch UV-Strahlung wird üblicherweise durch radikalische oder kationische Photoinitiatoren initiiert.

Werden die thermische Härtung und die Härtung mit aktinischem Licht gemeinsam angewandt, spricht man auch von "Dual Cure".

In der vorliegenden Erfindung sind sowohl Basislacke bevorzugt, die physikalisch, als auch solche die thermisch oder thermisch und mit aktinischer Strahlung, also mittels "Dual Cure", härtbar sind.

Als thermisch härtende Basislacke sind solche bevorzugt, die als Bindemittel (Hauptbindemittel) ein Polyurethanharz und als Vernetzungsmittel ein Aminoplastharz oder ein blockiertes oder unblockiertes Polyisocyanat, bevorzugt ein Aminoplastharz, enthalten. Unter den Aminoplastharzen sind Melaminharze bevorzugt.

Das bevorzugt enthaltene Polyurethanharz kann ionisch und/oder nicht ionisch hydrophil stabilisiert sein. In bevorzugten Ausführungsformen der vorliegenden Erfindung ist das Polyurethanharz ionisch hydrophil stabilisiert. Die bevorzugten Polyurethanharze sind linear oder enthalten Verzweigungen. Besonders bevorzugt handelt es sich um ein Polyurethanharz, in dessen Gegenwart olefinisch ungesättigte Monomere polymerisiert wurden. Das Polyurethanharz (A) kann dabei neben dem aus der Polymerisation der olefinisch ungesättigten Monomere hervorgegangenen Polymer vorliegen ohne dass diese kovalent miteinander verbunden sind. Ebenso kann das Polyurethanharz (A) aber auch mit dem aus der Polymerisation der olefinisch ungesättigten Monomere hervorgegangenen Polymer kovalent verbunden sein. Bei den olefinisch ungesättigten Monomeren handelt es sich bevorzugt um acrylat- und/oder methacrylatgruppenhaltige Monomere. Ebenfalls bevorzugt ist, dass die acrylat- und/oder methacrylatgruppenhaltigen Monomere in Kombination mit weiteren olefinisch ungesättigten Verbindungen eingesetzt werden, welche keine Acrylat- oder Methacrylatgruppen enthalten. Besonders bevorzugt werden als olefinisch ungesättigte Monomere acrylat- oder methacrylatgruppenhaltige Monomere an das Polyurethanharz (A) gebunden, wodurch Polyurethan(meth)acrylate entstehen. Ganz besonders bevorzugt ist das Polyurethanharz ein Polyurethan(meth)acrylat. Das bevorzugt enthaltene Polyurethanharz ist physikalisch, thermisch oder thermisch und mit aktinischer Strahlung härtbar. Insbesondere ist es thermisch oder thermisch und mit aktinischer Strahlung härtbar. Besonders bevorzugt umfasst das Polyurethanharz reaktive funktionelle Gruppen, durch die eine Fremdvernetzung möglich ist.

Geeignete gesättigte oder ungesättigte Polyurethanharze werden beispielsweise beschrieben in
- der deutschen Patentanmeldung DE 199 14 896 A1, Spalte 1, Zeilen 29 bis 49 und Spalte 4, Zeile 23 bis Spalte 11, Zeile 5,
- der deutschen Patentanmeldung DE 199 48 004 A1, Seite 4, Zeile 19 bis Seite 13, Zeile 48,
- der europäischen Patentanmeldung EP 0 228 003 A1, Seite 3, Zeile 24 bis Seite 5, Zeile 40,
- der europäischen Patentanmeldung EP 0 634 431 A1, Seite 3, Zeile 38 bis Seite 8, Zeile 9, oder
- der internationalen Patentanmeldung WO 92/15405, Seite 2, Zeile 35 bis Seite 10, Zeile 32.

Für die Herstellung des Polyurethanharzes werden vorzugsweise die dem Fachmann bekannten aliphatischen, cycloaliphatischen, aliphatisch-cycloaliphatischen, aromatischen, aliphatisch-aromatischen und/oder cycloaliphatisch-aromatischen Polyisocyanate eingesetzt.

Als Alkohol-Komponente für die Herstellung der Polyurethanharze werden bevorzugt die dem Fachmann bekannten, gesättigten und ungesättigten höhermolekularen und niedermolekularen Polyole sowie gegebenenfalls auch Monoalkohole in untergeordneten Mengen eingesetzt. Als niedermolekulare Polyole werden insbesondere Diole und in untergeordneten Mengen Triole zur Einführung von Verzweigungen eingesetzt. Beispiele geeigneter höhermolekularer Polyole sind gesättigte oder olefinisch ungesättigte Polyesterpolyole und/oder Polyetherpolyole. Insbesondere werden als höhermolekulare Polyole Polyesterpolyole, insbesondere solche mit einem zahlenmittleren Molekulargewicht von 400 bis 5000 g/mol.

Zur hydrophilen Stabilisierung beziehungsweise zur Erhöhung der Dispergierbarkeit in wässrigem Medium kann das bevorzugt enthaltene Polyurethanharz bestimmte ionische Gruppen und/oder Gruppen, die in ionische Gruppen überführt werden können (potentiell ionische Gruppen), enthalten. Solche Polyurethanharze werden im Rahmen der vorliegenden Erfindung als ionisch hydrophil stabilisierte Polyurethanharze bezeichnet. Ebenfalls enthalten sein können nicht ionische hydrophil modifizierende Gruppen. Bevorzugt sind aber die ionisch hydrophil stabilisierten Polyurethane. Genauer handelt es sich bei den modifizierenden Gruppen entweder um
- funktionelle Gruppen, die durch Neutralisationsmittel und/oder Quaternisierungsmittel in Kationen überführt werden können, und/oder kationische Gruppen (kationische Modifizierung)
   oder
- funktionelle Gruppen, die durch Neutralisationsmittel in Anionen überführt werden können, und/oder anionische Gruppen (anionische Modifizierung)
   und/oder
- nicht ionische hydrophile Gruppen (nicht-ionische Modifizierung).

Wie der Fachmann weiß, handelt es sich bei den funktionellen Gruppen zur kationischen Modifizierung um beispielsweise primäre, sekundäre und/oder tertiäre Aminogruppen, sekundäre Sulfidgruppen und/oder tertiäre Phosphingruppen, insbesondere tertiäre Aminogruppen und sekundäre Sulfidgruppen (funktionelle Gruppen, die durch Neutralisationsmittel und/oder Quaternisierungsmittel in kationische Gruppen überführt werden können). Weiterhin zu nennen sind die aus den vorgenannten funktionellen Gruppen unter Einsatz von dem Fachmann bekannten Neutralisationsmitteln und/oder Quaternisierungsmitteln hergestellte kationische Gruppen wie primäre, sekundäre, tertiäre und/oder quaternäre Ammoniumgruppen, tertiäre Sulfoniumgruppen und/oder quaternäre Phosphoniumgruppen, insbesondere quaternäre Ammoniumgruppen und tertiäre Sulfoniumgruppen.

Bei den funktionellen Gruppen zur anionischen Modifizierung handelt es sich bekanntermaßen um beispielsweise Carbonsäure-, Sulfonsäure- und/oder Phosphonsäuregruppen, insbesondere Carbonsäuregruppen (funktionelle Gruppen, die durch Neutralisationsmittel in anionische Gruppen überführt werden können) sowie aus den vorgenannten funktionellen Gruppen unter Einsatz von dem Fachmann bekannten Neutralisationsmittel hergestellte anionische Gruppen wie Carboxylat-, Sulfonat- und/oder Phosphonatgruppen.

Bei den funktionellen Gruppen zur nicht-ionischen hydrophilen Modifizierung handelt es sich vorzugsweise um Poly(oxyalkylen)-Gruppen, insbesondere Poly(oxyethylen)-Gruppen.

Die ionisch hydrophilen Modifizierungen können durch Monomere, welche die (potentiell) ionischen Gruppen enthalten, in das Polyurethanharz eingeführt werden. Die nicht-ionischen Modifizierungen werden beispielsweise durch den Einbau von Poly(ethylen)oxid-Polymeren als laterale oder endständige Gruppen der Polyurethanmoleküle eingeführt. Die hydrophilen Modifizierungen werden beispielsweise über Verbindungen eingeführt, die mindestens eine gegenüber Isocyanatgruppen reaktive Gruppe, vorzugsweise mindestens eine Hydroxygruppe, enthalten. Zur Einführung der ionischen Modifizierung können Monomere eingesetzt werden, die neben den modifizierenden Gruppen mindestens eine Hydroxygruppe enthalten. Zur Einführung der nicht-ionischen Modifizierungen werden bevorzugt die dem Fachmann bekannten Polyetherdiole und/oder Alkoxypoly(oxyalkylen)alkohole eingesetzt.

Vorzugsweise kann es sich bei dem Polyurethanharz um ein Pfropfpolymer handeln. Insbesondere handelt es sich um ein mittels olefinisch ungesättigten Verbindungen, vorzugsweise olefinisch ungesättigten Monomeren, gepfropftes Polyurethanharz. In diesem Fall ist das Polyurethan also beispielsweise mit Seitengruppen und/oder Seitenketten gepfropft, die auf olefinisch ungesättigten Monomeren basieren. Insbesondere handelt es sich um Seitenketten, die auf Poly(meth)acrylaten basieren. Als Poly(meth)acrylate werden im Rahmen der vorliegenden Erfindung Polymere beziehungsweise polymere Reste bezeichnet, die Acrylat- und/oder Methacrylatgruppen-haltige Monomere umfassen, vorzugsweise aus Acrylatund/oder Methacrylatgruppen-haltigen Monomeren bestehen. Unter Seitenketten, die auf Poly(meth)acrylaten basieren, sind Seitenketten zu verstehen, die bei der Pfropfpolymerisation unter Einsatz von (Meth)acrylatgruppen-haltigen Monomeren aufgebaut werden. Dabei werden bei der Pfropfpolymerisation vorzugsweise mehr als 50 mol-%, insbesondere mehr als 75 mol-%, insbesondere 100 mol.-%, bezogen auf die Gesamtmenge der bei der Pfropfpolymerisation eingesetzten Monomere, an (Meth)acrylatgruppen-haltigen Monomeren eingesetzt.

Die beschriebenen Seitenketten werden bevorzugt nach der Herstellung einer Polyurethanharz-Primärdispersion in das Polymer eingeführt. In diesem Fall kann das in der Primärdispersion vorliegende Polyurethanharz seiten- und/oder endständige olefinisch ungesättigte Gruppen enthalten, über die dann die Pfropfpolymerisation mit den olefinisch ungesättigten Verbindungen verläuft. Das zu pfropfende Polyurethanharz kann also ein ungesättigtes Polyurethanharz (A) sein. Bei der Pfropfpolymerisation handelt es sich dann um eine radikalische Polymerisation olefinisch ungesättigter Reaktionspartner. Möglich ist beispielsweise auch, dass die zur Pfropfpolymerisation eingesetzten olefinisch ungesättigten Verbindungen mindestens eine Hydroxygruppe enthalten. Dann kann auch zunächst eine Anbindung der olefinisch ungesättigten Verbindungen über diese Hydroxygruppen durch Reaktion mit freien Isocyanatgruppen des Polyurethanharzes erfolgen. Diese Anbindung findet anstelle oder neben der radikalischen Reaktion der olefinisch ungesättigten Verbindungen mit den gegebenenfalls vorhandenen seitenund/oder endständigen olefinisch ungesättigten Gruppen des Polyurethanharzes statt. Danach folgt dann wieder die Pfropfpolymerisation über radikalische Polymerisation wie sie weiter oben beschrieben wurde. Erhalten werden jedenfalls mit olefinisch ungesättigten Verbindungen, vorzugsweise olefinisch ungesättigten Monomeren, gepfropfte Polyurethanharze.

Als olefinisch ungesättigte Verbindungen, mit denen das Polyurethanharz (A) bevorzugt gepfropft wird, können praktisch alle radikalisch polymerisierbaren, olefinisch ungesättigten und organischen Monomere eingesetzt werden, die dem Fachmann für diese Zwecke zur Verfügung stehen. Beispielhaft seien einige bevorzugte Monomerklassen genannt:
- Hydroxyalkylester der (Meth)acrylsäure oder anderer alpha, beta -ethylenisch ungesättigter Carbonsäuren,
- (Meth)acrylsäurealkylester und/oder -cycloalkylester mit bis zu 20 Kohlenstoffatomen im Alkylrest,
- Ethylenisch ungesättigte Monomere, enthaltend mindestens eine Säuregruppe, insbesondere genau eine Carboxylgruppe, wie beispielsweise (Meth)acrylsäure,
- Vinylester von in alpha-Stellung verzweigten Monocarbonsäuren mit 5 bis 18 Kohlenstoffatomen,
- Umsetzungsprodukte aus (Meth)acrylsäure mit dem Glycidylester einer in alpha-Stellung verzweigten Monocarbonsäure mit 5 bis 18 Kohlenstoffatomen,
- Weitere ethylenisch ungesättigte Monomere wie Olefine (beispielsweise Ethylen), (Meth)acrylsäureamide, vinylaromatische Kohlenwasserstoffe (beispielsweise Styrol), Vinylverbindungen wie Vinylchlorid und/oder Vinylether wie Ethylvinylether.

Bevorzugt werden (Meth)acrylatgruppen-haltige Monomere eingesetzt, sodass das es sich bei den aufgepfropften Seitenketten um Poly(meth)acrylat-basierende Seitenketten handelt.

Die seiten- und/oder endständigen olefinisch ungesättigten Gruppen in dem Polyurethanharz, über die die Pfropfpolymerisation mit den olefinisch ungesättigten Verbindungen verlaufen kann, werden bevorzugt über bestimmte Monomere in das Polyurethanharz eingeführt. Diese bestimmten Monomere enthalten neben einer olefinisch ungesättigten Gruppe beispielsweise noch mindestens eine gegenüber Isocyanatgruppen reaktive Gruppe. Bevorzugt sind Hydroxygruppen sowie primäre und sekundäre Aminogruppen. Insbesondere bevorzugt sind Hydroxygruppen.

Natürlich können die beschriebenen Monomere, durch welche die seiten- und/oder endständigen olefinisch ungesättigten Gruppen in das Polyurethanharz eingeführt werden können, auch zum Einsatz kommen, ohne dass das Polyurethanharz danach noch zusätzlich mit olefinisch ungesättigten Verbindungen gepfropft wird. Bevorzugt ist allerdings, dass das Polyurethanharz mit olefinisch ungesättigten Verbindungen gepfropft ist.

Das bevorzugt enthaltene Polyurethanharz kann ein selbst- und/oder fremdvernetzendes Bindemittel sein. Bevorzugt umfasst das Polyurethanharz reaktive funktionelle Gruppen, durch die eine Fremdvernetzung möglich ist. In diesem Fall ist in dem pigmentierten wässrigen Basislack bevorzugt mindestens ein Vernetzungsmittel enthalten. Insbesondere handelt es sich bei den reaktiven funktionellen Gruppen, durch die eine Fremdvernetzung möglich ist, um Hydroxygruppen. Besonders vorteilhaft sind im Rahmen des erfindungsgemäßen Verfahrens polyhydroxyfunktionelle Polyurethanharze einsetzbar. Dies bedeutet, dass das Polyurethanharz im Mittel mehr als eine Hydroxygruppe pro Molekül enthält.

Die Herstellung des Polyurethanharzes erfolgt nach den üblichen Methoden der Polymerchemie. Gemeint sind dabei beispielsweise die Polymerisation von Polyisocyanaten und Polyolen zu Polyurethanen und die bevorzugt dann folgende Pfropfpolymerisation mit olefinisch ungesättigten Verbindungen. Diese Methoden sind dem Fachmann bekannt und können individuell angepasst werden. Beispielhafte Herstellungsverfahren und Reaktionsbedingungen sind der europäischen Patentschrift EP 0521 928 B1, Seite 2, Zeile 57 bis Seite 8, Zeile 16 zu entnehmen.

Unter filmbildendem Festkörper, welcher dem Bindemittelgehalt entspricht, ist der nichtflüchtige Gewichtsanteil des Basislacks ohne Pigmente und gegebenenfalls enthaltene Füllstoffe zu verstehen. Der filmbildende Festkörper ist folgendermaßen bestimmbar: Eine Probe des pigmentierten wässrigen Basislacks (etwa 1 g) wird mit der 50 bis 100-fachen Menge Tetrahydrofuran versetzt und dann etwa 10 Minuten gerührt. Anschließend werden die unlöslichen Pigmente und gegebenenfalls Füllstoffe abfiltriert, der Rückstand mit wenig THF nachgespült und von dem so erhaltenen Filtrat das THF am Rotationsverdampfer entfernt. Der Rückstand des Filtrats wird zwei Stunden bei 120°C getrocknet und der dabei resultierende filmbildende Festkörper ausgewogen.

Der Polyurethanharzgehalt liegt bevorzugt zwischen 5 und 80 Gew.-%, besonders bevorzugt zwischen 8 und 70 Gew.-% und besonders bevorzugt zwischen 10 und 60 Gew.-%, jeweils bezogen auf den filmbildenden Festkörper des Basislacks.

Das bevorzugt enthaltene Polyurethanharz besitzt vorzugsweise ein zahlenmittleres Molekulargewicht von 200 bis 30000 g/mol, bevorzugt von 2000 bis 20000 g/mol. Es besitzt zudem beispielsweise eine Hydroxylzahl von 0 bis 250 mg KOH/g, insbesondere aber von 20 bis 150 mg KOH/g. Die Säurezahl des Polyurethanharzes liegt bevorzugt bei 5 bis 200 mg KOH/g, insbesondere bei 10 bis 40 mg KOH/g. Die Hydroxylzahl wird nach DIN / ISO 4629, die Säurezahl gemäß DIN 53402 bestimmt.

Der einzusetzende pigmentierte wässrige Basislack kann zudem mindestens einen, von den erfindungsgemäßen Dimerfettsäure-Polyesterdiol-Reaktionsprodukten verschiedenen, Polyester enthalten, insbesondere einen Polyester mit einem zahlenmittleren Molekulargewicht von 400 bis 5000 g/mol. Entsprechende Polyester werden in DE 4009858 in Spalte 6, Zeile 53 bis Spalte 7, Zeile 61 und Spalte 10, Zeile 24 bis Spalte 13, Zeile 3 beschrieben.

Bevorzugt ist zudem ein Verdicker enthalten. Als Verdicker eignen sich anorganische Verdicker aus der Gruppe der Schichtsilikate. Neben den anorganischen Verdickern können jedoch auch ein oder mehrere organische Verdicker eingesetzt werden. Diese werden vorzugsweise gewählt aus der Gruppe bestehend aus (Meth)acrylsäure-(Meth)acrylat-Copolymerisat-Verdickern, wie beispielsweise dem Handelsprodukt Viscalex HV30 (Ciba, BASF) und Polyurethanverdickern, wie beispielsweise dem Handelsprodukt DSX ® 1550 der Firma BASF. Die eingesetzten Verdicker sind von den eingesetzten Bindemitteln verschieden.

Darüber hinaus kann der pigmentierte wässrige Basislack noch mindestens einen Zusatzstoff enthalten. Beispiele für derartige Zusatzstoffe sind rückstandsfrei oder im Wesentlichen rückstandsfrei thermisch zersetzbare Salze, von Polyurethanharzen verschiedene physikalisch, thermisch und/oder mit aktinischer Strahlung härtbare Harze als Bindemittel, weitere Vernetzungsmittel, organische Lösemittel, Reaktivverdünner, transparente Pigmente, Füllstoffe, molekulardispers lösliche Farbstoffe, Nanopartikel, Lichtschutzmittel, Antioxidantien, Entlüftungsmittel, Emulgatoren, Slipadditive, Polymerisationsinhibitoren, Initiatoren für radikalische Polymerisationen, Haftvermittler, Verlaufsmittel, filmbildende Hilfsmittel, Sag-Control-Agents (SCAs), Flammschutzmittel, Korrosionsinhibitoren, Wachse, Sikkative, Biozide und Mattierungsmittel.

Geeignete Zusatzstoffe der vorstehend genannten Art sind beispielsweise aus
- der deutschen Patentanmeldung DE 199 48 004 A1, Seite 14, Zeile 4, bis Seite 17, Zeile 5,
- dem deutschen Patent DE 100 43 405 C1, Spalte 5, Absätze [0031] bis [0033],
bekannt. Sie werden in den üblichen und bekannten Mengen eingesetzt.

Der Festkörpergehalt der erfindungsgemäß eingesetzten Basislacke kann je nach den Erfordernissen des Einzelfalls variieren. In erster Linie richtet sich der Festkörpergehalt nach der für die Applikation, insbesondere Spritzapplikation, erforderlichen Viskosität, so dass er vom Fachmann aufgrund seines allgemeinen Fachwissens gegebenenfalls unter Zuhilfenahme weniger orientierender Versuche eingestellt werden kann.

Vorzugsweise liegt der Festkörpergehalt der Basislacke bei 5 bis 70 Gew.-%, besonders bevorzugt bei 8 bis 60 Gew.-% und ganz besonders bevorzugt bei 12 bis 55 Gew.-%.

Unter Festkörpergehalt ist derjenige Gewichtsanteil zu versehen, der unter festgelegten Bedingungen beim Eindampfen als Rückstand verbleibt. In der vorliegenden Anmeldung wurde der Festkörper nach DIN EN ISO 3251 bestimmt. Dazu wird der Beschichtungsstoff für 60 Minuten bei 130°C eingedampft.

Die Herstellung der erfindungsgemäß eingesetzten Basislacke kann unter Einsatz der für die Herstellung von Basislacken üblichen und bekannten Mischverfahren und Mischaggregaten erfolgen.

Ein weiterer Aspekt der vorliegenden Erfindung ist ein Verfahren zur Herstellung einer mehrschichtigen Lackierung, bei dem
(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird,
welches dadurch gekennzeichnet ist, dass in Stufe (1) ein pigmentierter wässriger Basislack eingesetzt wird, welcher das erfindungsgemäße Dimerfettsäure-Polyesterdiol-Reaktionsprodukt enthält. Alle vorstehend genannten Ausführungen hinsichtlich des erfindungsgemäßen Dimerfettsäure-Polyesterdiol-Reaktionsprodukts und des pigmentierten wässrigen Basislacks gelten auch für die erfindungsgemäße Verwendung. Dies gilt insbesondere auch für alle bevorzugten, besonders bevorzugten und ganz besonders bevorzugten Merkmale.

Das besagte Verfahren wird bevorzugt zur Herstellung von farbgebenden Mehrschichtlackierungen, effektgebenden Lackierungen und farb- und effektgebenden Lackierungen eingesetzt.

Die Applikation des erfindungsgemäß eingesetzten pigmentierten wässrigen Basislacks erfolgt üblicherweise auf mit Füller oder Grundierfüller vorbehandelte Metall- oder Kunststoffsubstrate. Gegebenenfalls kann der besagte Basislack auch direkt auf dem Kunststoffuntergrund aufgebracht werden.

Soll ein Metallsubstrat beschichtet werden, so wir dieses vor der Applikation des Füllers oder Grundierfüllers bevorzugt noch mit einer Elektrotauchlackierung beschichtet.

Wird ein Kunststoffsubstrat beschichtet, so wir dieses vor der Applikation des Füllers oder Grundierfüllers bevorzugt noch vorbehandelt. Die hierzu am häufigsten angewendeten Verfahren sind das Beflammen, die Plasmabehandlung und die Corona-Entladung. Bevorzugt wird das Beflammen eingesetzt.

Die Applikation des erfindungsgemäß eingesetzten pigmentierten wässrigen Basislacks auf ein Metallsubstrat kann in den im Rahmen der Automobilindustrie üblichen Schichtdicken im Bereich von beispielsweise 5 bis 100 Mikrometer, bevorzugt 5 bis 60 Mikrometer erfolgen. Dabei werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen.

Nach der Applikation des pigmentierten wässrigen Basislacks kann dieser nach bekannten Methoden getrocknet werden. Beispielsweise können (1K)-Basislacke bei Raumtemperatur für 1 bis 60 Minuten abgelüftet werden und darauf folgend bevorzugt bei gegebenenfalls leicht erhöhten Temperaturen von 30 bis 80°C getrocknet werden. Unter Ablüften und Trocknung ist im Rahmen der vorliegenden Erfindung ein Abdunsten von organischen Lösemitteln und/oder Wasser zu verstehen, wodurch der Lack trockener, aber noch nicht gehärtet wird. Beziehungsweise noch kein vollständig vernetzter Lackfilm gebildet wird.

Dann wird ein handelsüblicher Klarlack nach ebenfalls gängigen Methoden appliziert, wobei die Schichtdicken wiederum in den gängigen Bereichen, beispielsweise 5 bis 100 Mikrometer, liegen.

Nach der Applikation des Klarlacks kann dieser bei Raumtemperatur für beispielsweise 1 bis 60 Minuten abgelüftet und gegebenenfalls getrocknet werden. Dann wird der Klarlack zusammen mit dem applizierten pigmentierten Basislack gehärtet. Dabei finden beispielsweise Vernetzungsreaktionen statt, wodurch eine erfindungsgemäße farb- und/oder effektgebende mehrschichtige Lackierung auf einem Substrat hergestellt wird. Die Härtung erfolgt bevorzugt thermisch bei Temperaturen von 60 bis 200°C. Als thermisch härtende Basislacke sind solche bevorzugt, die als zusätzliches Bindemittel ein Polyurethanharz und als Vernetzungsmittel ein Aminoplastharz oder ein blockiertes oder unblockiertes Polyisocyanat, bevorzugt ein Aminoplasthatz, enthalten. Unter den Aminoplastharzen sind Melaminharze bevorzugt.

Die Beschichtung von Kunststoffsubstraten erfolgt im Grunde genommen analog zu der von Metallsubstraten. Allerdings wird hier im Allgemeinen bei deutlich niedrigeren Temperaturen von 30 bis 90 °C gehärtet. Bevorzugt ist daher der Einsatz von Zweikomponentenklarlacken. Ferner werden bevorzugt Basislacke eingesetzt, welche als Bindemittel ein Polyurethanharz aber keinen Vernetzer enthalten.

Mit Hilfe des erfindungsgemäßen Verfahrens können metallische und nichtmetallische Substrate, insbesondere Kunststoffsubstrate, vorzugsweise Automobilkarosserien oder Teile davon lackiert werden.

Das erfindungsgemäße Verfahren kann ferner zur Doppellackierung in der OEM-Lackierung eingesetzt werden. Darunter ist zu verstehen, dass ein Substrat, welches mit Hilfe des erfindungsgemäßen Verfahrens beschichtet wurde, ein zweites Mal, ebenfalls mit Hilfe des erfindungsgemäßen Verfahrens, lackiert wird.

Die Erfindung betrifft ferner Mehrschichtlackierungen, welche nach dem oben beschriebenen Verfahren herstellbar sind. Diese Mehrschichtlackierungen sollen im Folgenden als erfindungsgemäße Mehrschichtlackierungen bezeichnet werden.

Alle vorstehend genannten Ausführungen hinsichtlich des erfindungsgemäßen Dimerfettsäure-Polyesterdiol-Reaktionsprodukts, des pigmentierten wässrigen Basislacks und des erfindungsgemäßen Verfahrens gelten entsprechend auch für die besagte Mehrschichtlackierung. Dies gilt insbesondere auch für alle bevorzugten, besonders bevorzugten und ganz besonders bevorzugten Merkmale.

Bevorzugt handelt es sich bei den erfindungsgemäßen Mehrschichtlackierungen um farbgebende Mehrschichtlackierungen, effektgebenden Lackierungen und farb- und effektgebenden Lackierungen.

Ein weiterer Aspekt der Erfindung betrifft das erfindungsgemäße Verfahren, wobei es sich bei dem besagten Substrat aus Stufe (1) um eine Mehrschichtlackierung handelt, welche Fehlstellen besitzt.

Das erfindungsgemäße Verfahren eignet sich demnach zur Ausbesserung von Fehlstellen auf Mehrschichtlackierungen. Als Fehlstellen beziehungsweise Filmfehler werden im Allgemeinen Störungen an und in der Beschichtung, die meist nach ihrer Form oder ihrem Aussehen benannt werden, bezeichnet. Dem Fachmann ist eine Vielzahl von möglichen Arten von solchen Filmfehlern bekannt. Diese werden beispielsweise in Römpp-Lexikon Lacke und Druckfarben, Georg Thieme Verlag, Stuttgart, New York, 1998, Seite 235,"Filmfehler" beschrieben.

Die mit Hilfe des erfindungsgemäßen Verfahrens hergestellten Mehrschichtlackierungen können ebenfalls solche Fehlstellen aufweisen. In einer bevorzugten Ausführungsform des erfindungsgemäßen Verfahrens handelt es sich bei dem Substrat aus Stufe (1) daher um eine erfindungsgemäße Mehrschichtlackierung, welche Fehlstellen aufweist.

Diese Mehrschichtlackierungen werden bevorzugt auf Automobilkarossen oder Teilen davon mit Hilfe des oben bezeichneten erfindungsgemäßen Verfahrens im Rahmen der Automobilserienlackierung hergestellt. Treten solche Fehlstellen direkt nach erfolgter OEM-Lackierung auf, so werden diese direkt ausgebessert. Man spricht daher auch von OEM-Automobilreparaturlackierung. Sind nur kleine Fehlstellen auszubessern, so wird nicht die ganze Karosse (Doppellackierung), sondern nur der sogenannte "Spot" repariert. Dieser Prozess wird "Spot Repair" genannt. Besonders bevorzugt ist daher der Einsatz des erfindungsgemäßen Verfahrens zum Ausbessern von Fehlstellen auf erfindungsgemäßen Mehrschichtlackierungen in der OEM-Automobilreparaturlackierung.

Damit die ausgebesserte Stelle sich farblich nicht vom Rest der Originallackierung unterscheidet, ist es bevorzugt, dass der in Stufe (1) des erfindungsgemäßen Verfahrens zur Ausbesserung von Fehlstellen eingesetzte wässrige Basislack derselbe ist, wie der, welcher im erfindungsgemäßen Verfahren zur Herstellung der erfindungsgemäßen mehrschichtigen Lackierung eingesetzt wird.

Die vorstehend genannten Ausführungen bezüglich des erfindungsgemäßen Dimerfettsäure-Polyesterdiol-Reaktionsprodukts und des wässrigen pigmentierten Basislacks gelten somit auch für den in Rede stehenden Einsatz des erfindungsgemäßen Verfahrens zum Ausbessern von Fehlstellen auf einer mehrschichtigen Lackierung. Dies gilt insbesondere auch für alle genannten bevorzugten, besonders bevorzugten und ganz besonders bevorzugten Merkmale. Es ist weiterhin bevorzugt, dass es sich bei den auszubessernden, erfindungsgemäßen Mehrschichtlackierungen um farbgebende Mehrschichtlackierungen, effektgebenden Lackierungen und farb- und effektgebenden Lackierungen handelt.

Die oben beschriebenen Fehlstellen auf der erfindungsgemäßen Mehrschichtlackierung lassen sich mit Hilfe des vorstehend beschriebenen erfindungsgemäßen Verfahrens ausbessern. Hierzu kann die auszubessernde Oberfläche der Mehrschichtlackierung zunächst angeschliffen werden. Anschließend erfolgt die Applikation des pigmentierten wässrigen Basislacks auf die Fehlstelle in der Originallackierung durch pneumatische Zerstäubung. Nach der Applikation des pigmentierten wässrigen Basislacks kann dieser nach bekannten Methoden getrocknet werden. Beispielsweise kann der Basislack bei Raumtemperatur für 1 bis 60 Minuten getrocknet werden und darauf folgend bei gegebenenfalls leicht erhöhten Temperaturen von 30 bis 80°C getrocknet werden. Unter Ablüften und Trocknung ist im Rahmen der vorliegenden Erfindung ein Abdunsten von organischen Lösemitteln und/oder Wasser zu verstehen, wodurch der Lack noch nicht vollständig gehärtet wird. Im Rahmen der vorliegenden Erfindung ist es bevorzugt, dass der Basislack als Bindemittel ein Polyurethanharz und als Vernetzungsmittel ein Aminoplastharz, bevorzugt ein Melaminharz, enthält.

Anschließend wird ein handelsüblicher Klarlack nach ebenfalls gängigen Methoden appliziert. Nach der Applikation des Klarlacks kann dieser bei Raumtemperatur für beispielsweise 1 bis 60 Minuten abgelüftet und gegebenenfalls getrocknet werden. Dann wird der Klarlack zusammen mit dem applizierten pigmentierten Basislack gehärtet.

Beim sogenannten Niedrigtemperatureinbrennen erfolgt die Härtung vorzugsweise bei Temperaturen von 20 bis 90°C. Hier werden bevorzugt Zweikomponentenklarlacke eingesetzt. Wird, wie oben beschrieben, als weiteres Bindemittel ein Polyurethanharz und als Vernetzungsmittel ein Aminoplastharz eingesetzt, so kommt es bei diesen Temperaturen in der Basislackschicht nur zu einer geringen Vernetzung durch das Aminoplastharz. Neben seiner Funktion als Härter dient das Aminoplastharz hierbei auch der Plastifizierung und kann die Pigmentbenetzung unterstützen. Neben den Aminoplastharzen können auch unblockierte Isocyanate eingesetzt werden. Diese vernetzen je nach Art des eingesetzten Isocyanats schon bei Temperaturen ab 20 °C.

Beim sogenannten Hochtemperatureinbrennen erfolgt die Härtung vorzugsweise bei Temperaturen von 130 bis 150°C. Hier werden sowohl Einkomponenten- als auch Zweikomponentenklarlacke eingesetzt. Wird, wie oben beschrieben, als weiteres Bindemittel ein Polyurethanharz und als Vernetzungsmittel ein Aminoplastharz eingesetzt, so kommt es bei diesen Temperaturen in der Basislackschicht zu einer Vernetzung durch das Aminoplastharz.

Ein weiterer Aspekt der vorliegenden Erfindung ist die Verwendung des erfindungsgemäßen Dimerfettsäure-Polyesterdiol-Reaktionsprodukts in pigmentierten wässrigen Basislacken zur Haftungsverbesserung. Hierunter ist die Haftungsverbesserung gegenüber solchen pigmentierten wässrigen Basislacken zu verstehen, die kein erfindungsgemäßes Dimerfettsäure-Polyesterdiol-Reaktionsprodukt enthalten.

Das erfindungsgemäße Dimerfettsäure-Polyesterdiol-Reaktionsprodukt kann zur Haftungsverbesserung bei der Lackierung von Metall- und Kunststoffsubstraten eingesetzt werden. Ebenso lässt es sich in der Autoreparaturlackierung einsetzen. Unter Autoreparaturlackierung ist sowohl die OEM-Automobilreparaturlackierung als auch die Automobilreparaturlackierung gemeint, welche beispielsweise in einer Werkstatt stattfindet.

Werden die besagten pigmentierten wässrigen Basislacke bei der Lackierung von Metall- und Kunststoffsubstraten eingesetzt, so führt der Einsatz des erfindungsgemäßen Dimerfettsäure-Polyesterdiol-Reaktionsprodukts insbesondere zu einer Verbesserung der Haftung zwischen der Basislack- und der unmittelbar an diese angrenzende Klarlackschicht. Das erfindungsgemäße Dimerfettsäure-Polyesterdiol-Reaktionsprodukt wird daher bevorzugt zur Haftungsverbesserung zwischen Basislack- und Klarlackschicht bei der Lackierung von Metall- und Kunststoffsubstraten verwendet.

Werden die besagten pigmentierten wässrigen Basislacke bei der Autoreparaturlackierung eingesetzt, so führt der Einsatz des erfindungsgemäßen Dimerfettsäure-Polyesterdiol-Reaktionsprodukts insbesondere zu einer Haftungsverbesserung zwischen Basislack und Erstlackierung. Das erfindungsgemäße Dimerfettsäure-Polyesterdiol-Reaktionsprodukt wird daher ebenso bevorzugt zur Verbesserung der Haftung zwischen Basislack- und Erstlackierung in der Autoreparaturlackierung, besonders bevorzugt in der OEM-Automobilreparaturlackierung verwendet.

Die Haftungsproblematik ist insbesondere dann eklatant, wenn die beschichteten Substrate der Witterung ausgesetzt sind. Entsprechende Witterungsverhältnisse lassen sich durch eine sogenannte Schwitzwasserlagerung simulieren. Der Begriff Schwitzwasserlagerung bezeichnet die Lagerung von beschichteten Substraten in einer Klimakammer nach Prüfklima CH nach DIN EN ISO 6270-2:2005-09.

Die erfindungsgemäßen Dimerfettsäure-Polyesterdiol-Reaktionsprodukte werden daher insbesondere auch verwendet, um die Haftung nach einer Schwitzwasserlagerung zu verbessern. Die Haftung wird bevorzugt mittels Dampfstrahltest nach Prüfverfahren A der DIN 55662:2009-12 untersucht.

Wenn beschichtete Substrate der Witterung ausgesetzt sind, dann manifestiert sich eine schlechte Haftung insbesondere auch im Auftreten von Blasen und Quellungen. Die erfindungsgemäßen Dimerfettsäure-Polyesterdiol-Reaktionsprodukte werden daher insbesondere auch verwendet, um das Auftreten von Blasen und Quellungen zu reduzieren oder zu verhindern. Das Vorliegen von Blasen und Quellungen kann dabei visuell begutachtet werden.

Im Folgenden wird die Erfindung anhand von Beispielen erläutert.

### Beispiele

Die eingesetzte Dimerfettsäure enthält weniger als 1,5 Gew.-% trimere Moleküle, 98 Gew.-% dimere Moleküle und kleiner 0,3 Gew.-% Fettsäure (Monomer) und wird auf der Basis von Linolen-, Linol- und Ölsäure hergestellt.

### Polyester 1 (P1):

Hergestellt gemäß Beispiel D, Spalte 16, Z. 37 bis 59 der DE 4009858 A. Die entsprechende Dispersion des Polyesters hat einen Festkörpergehalt von 60 Gew.-%, wobei als Lösemittel Butylglykol anstatt Butanol verwendet wird.

### Erfindungsgemäßes Dimerfettsäure-Polyesterdiol-Reaktionsprodukt 1 (DP1):

In einem 4 I Edelstahlreaktor, ausgestattet mit Ankerrührer, Thermometer, Kolonne, Thermometer zur Kopftemperaturmessung, Kühler und Wasserabscheider wurden 1100 g lineares Polycaprolactondiol (Capromer PD4-05 (PolyCLO DEG550), Fa. BASF SE), 579,3 g Dimerfettsäure (1 mol) (Pripol^{®} 1012, Fa. Croda) und 13,6 g Xylol in Anwesenheit von 1,3 g Di-n-Butylzinnoxid (Axion^{®} CS 2455, Fa. Chemtura) auf 100°C aufgeheizt. Es wurde langsam weitergeheizt bis zum Einsetzen der Kondensation. Bei einer maximalen Kopftemperatur von 85°C wurde dann schrittweise bis auf 210°C weitergeheizt und Wasser ausgekreist. Der Reaktionsfortschritt wurde über die Bestimmung der Säurezahl verfolgt. Nach Erreichen einer Säurezahl von <1,5 mg KOH/g wurde noch vorhandenes Xylol unter Vakuum abdestilliert. Man erhielt ein bei Raumtemperatur festes Reaktionsprodukt. Mittels Gaschromatographie wurde ein Xylol-Gehalt kleiner 0,1% bestimmt.
Kondensatmenge (Wasser): 36,2 g
Säurezahl: 0,1 mg KOH / g
Feststoffgehalt (GC): 100,0 %
Mₙ (zahlenmittlere Molmasse (Dampfdruckosmose)):1450 g/mol
Viskosität (Harz : Xylol = 2 : 1): 168 mPas,
(gemessen bei 23°C mit einem Rotationsviskosimeter der Fa. Brookfield, Typ CAP 2000+, Spindel 3, Scherrate: 13333 s⁻¹)

### Erfindungsgemäßes Dimerfettsäure-Polyesterdiol-Reaktionsprodukt 2 (DP2):

In einem 4 I Edelstahlreaktor, ausgestattet mit Ankerrührer, Thermometer, Kolonne, Thermometer zur Kopftemperaturmessung, Kühler und Wasserabscheider wurden 215,7 g Diethylenglykol (Fa. BASF SE), 1784,3 g epsilon-Caprolacton (Fa. BASF SE) und 32,9 g Octa Soligen Zinn 28 (stabilisiertes Zinnoctanoat, Zinngehalt: 28,0%) (Fa. Borchers) auf 150°C aufgeheizt und 5 Stunden bei dieser Temperatur gehalten. Anschließend wurde unter gleichzeitiger Kühlung zum entstandenen, linearen Polycaprolactondiol 1000 solange Xylol geben, bis ein theoretischer Festanteil von ca. 80 % resultierte. Es wurde eine OH-Zahl von 111,2 mg KOH / g Festanteil (Theorie: 112,2 mg KOH / g Festanteil) gefunden.

Die Lösung des Polycaprolactondiol 1000 wurde auf 50°C weiter abgekühlt, um bei dieser Temperatur 579,3 g Dimerfettsäure (1 mol) (Pripol^{®} 1012, Fa. Croda), sowie 2,1 g Di-n-Butylzinnoxid (Axion^{®} CS 2455, Fa. Chemtura) hinzugegeben. Nun wurde langsam aufgeheizt bis zum Einsetzen der Kondensation, wobei Xylol und Wasser abdestilliert wurden, bis nur noch ein geringer Anteil von 21 g Xylol verblieb. Bei einer maximalen Kopftemperatur von 85°C wurde dann schrittweise bis auf 210°C weitergeheizt und Wasser ausgekreist. Der Reaktionsfortschritt wurde über die Bestimmung der Säurezahl verfolgt. Nach Erreichen einer Säurezahl von <1,5 mg KOH/g wurde noch vorhandenes Xylol unter Vakuum abdestilliert. Man erhielt ein bei Raumtemperatur festes Reaktionsprodukt.

Mittels Gaschromatographie wurde ein Xylol-Gehalt kleiner 0,1% bestimmt.
Kondensatmenge (Wasser): 37,0 g
Säurezahl: 0,2 mg KOH / g
Feststoffgehalt (GC): 100,0 %
Mₙ (zahlenmittlere Molmasse (Dampfdruckosmose)):2400 g/mol
Viskosität (Harz : Xylol = 2 : 1): 354 mPas,
(gemessen bei 23°C mit einem Rotationsviskosimeter der Fa. Brookfield, Typ CAP 2000+, Spindel 3, Scherrate: 13333 s⁻¹)

### Erfindungsgemäßes Dimerfettsäure-Polyesterdiol-Reaktionsprodukt 3 (DP3):

In einem 4 I Edelstahlreaktor, ausgestattet mit Ankerrührer, Thermometer, Kolonne, Thermometer zur Kopftemperaturmessung, Kühler und Wasserabscheider wurden 138,9 g Diethylenglykol (Fa. BASF SE), 2458,5 g epsilon-Caprolacton (Fa. BASF SE) und 21,2 g Octa Soligen Zinn 28 (stabilisiertes Zinnoctanoat, Zinngehalt: 28,0%) (Fa. Borchers) auf 150°C aufgeheizt und 5 Stunden bei dieser Temperatur gehalten. Anschließend wurde unter gleichzeitiger Kühlung zum entstandenen, linearen Polycaprolactondiol 2000 solange Xylol geben, bis ein theoretischer Festanteil von ca. 80 % resultierte. Es wurde eine OH-Zahl von 55,8, mg KOH / g Festanteil (Theorie: 56,1 mg KOH / g Festanteil) gefunden.

Die Lösung des Polycaprolactondiol 2000 wurde auf 50°C weiter abgekühlt, um bei dieser Temperatur 376,2 g Dimerfettsäure (0,649 mol) (Pripol^{®} 1012, Fa. Croda), sowie2,4 g Di-n-Butylzinnoxid (Axion^{®} CS 2455, Fa. Chemtura) hinzugegeben. Nun wurde langsam aufgeheizt bis zum Einsetzen der Kondensation, wobei Xylol und Wasser abdestilliert wurden, bis nur noch ein geringer Anteil von 24 g Xylol verblieb. Bei einer maximalen Kopftemperatur von 85°C wurde dann schrittweise bis auf 210°C weitergeheizt und Wasser ausgekreist. Der Reaktionsfortschritt wurde über die Bestimmung der Säurezahl verfolgt. Nach Erreichen einer Säurezahl von <1,5 mg KOH/g wurde noch vorhandenes Xylol unter Vakuum abdestilliert. Man erhielt ein bei Raumtemperatur festes Reaktionsprodukt.

Mittels Gaschromatographie wurde ein Xylol-Gehalt kleiner 0,1% bestimmt.
Kondensatmenge (Wasser): 23,8 g
Säurezahl: 0,4 mg KOH / g
Feststoffgehalt (GC): 100,0 %
Mₙ (zahlenmittlere Molmasse (Dampfdruckosmose)): 4450 g/mol
Viskosität (Harz : Xylol = 2 : 1): 604 mPas,
(gemessen bei 23°C mit einem Rotationsviskosimeter der Fa. Brookfield, Typ CAP 2000+, Spindel 3, Scherrate: 13333 s⁻¹)

### Beispiele für Lackformulierungen

### 1. Herstellung eines silbernen Wasserbasislacks 1

Die in der Tabelle A unter "wässrige Phase" aufgeführten Komponenten wurden in der angegebenen Reihenfolge zu einer wässrigen Mischung zusammengerührt. Im nächsten Schritt wurde aus den unter "organische Phase" aufgeführten Komponenten eine organische Mischung hergestellt. Die organische Mischung wurde zur wässrigen Mischung hinzugegeben. Sodann wurde 10 Minuten lang gerührt und mit Hilfe von deionisiertem Wasser und Dimethylethanolamin auf einen pH Wert von 8 und eine Spritzviskosität von 58 mPas bei einer Scherbelastung von 1000 s⁻¹, gemessen mit einem Rotations-Viskosimeter (Gerät Rheomat RM 180 der Firma Mettler-Toledo) bei 23°C, eingestellt.

**Tabelle A:**

| Komponente | Gewichtsteile |
|---|---|
| **Wässrige Phase** | |
| 3%ige Na-Mg-Schichtsilikatlösung | 26 |
| Deionisiertes Wasser | 13,6 |
| Butylglykol | 2,8 |
| Polyurethanmodifiziertes Polyacrylat; hergestellt gemäß S. 7, Z. 55 bis S.8, Z. 23 der DE 4437535 A | 4,5 |
| 50 Gew.-%ige Lösung DSX 1550 (BASF) Rheologiemittel | 0,6 |
| P1 | 3,2 |
| Tetramethyldecindiol (Tensid der Firma BASF) | 0,3 |
| Melaminformaldehydharz (Cymel 203 von Cytec) | 4,1 |
| 10%iges Dimethylethanolamin in Wasser | 0,3 |
| Pfropfmischpolymerisat auf Polyurethanbasis; hergestellt gemäß S. 19, Z. 44 bis S. 20, Z. 21 der DE 19948004 A | 20,4 |
| Tetramethyldecindiol (Tensid der Firma BASF) | 1,6 |
| 3 Gew.-%ige wässrige Viscalex HV 30 Lösung; Rheologiemittel, erhältlich von BASF | 3,9 |
| **Organische Phase** | |
| Mischung zweier handelsüblicher Aluminiumpigmente, erhältlich von Firma Altana-Eckart | 6,2 |
| Butylglykol | 7,5 |
| P1 | 5 |

### Wasserbasislack E1:

Zur Herstellung des erfindungsgemäßen Wasserbasislacks E1 wurde ein Lack analog der Herstellung des Wasserbasislacks 1 hergestellt, wobei anstelle des Polyesters P1 sowohl in der wässrigen Phase als auch in der organischen Phase DP1 eingesetzt wurde. DP1 der organischen Phase wurde dabei zunächst in einem Drittel der in der organischen Phase vorhandenen Menge an Butylglykol gelöst. Zusätzlich wurden 0,984 Gewichtsteile Butylglykol zur organischen Phase zugegeben, um den Lösemittelgehalt der organischen Phase auszugleichen. DP1 der wässrigen Phase wurden in 0,64 Gewichtsteile Butylglykol gelöst, wodurch auch der Lösemittelgehalt der wässrigen Phase ausgeglichen wurde.

### Wasserbasislack E2:

Zur Herstellung des erfindungsgemäßen Wasserbasislacks E2 wurde ein Lack analog der Herstellung des Wasserbasislacks 1 hergestellt, wobei anstelle des Polyesters P1 sowohl in der wässrigen Phase als auch in der organischen Phase DP2 eingesetzt wurde. DP2 wurde dabei zunächst in einem Drittel der in der organischen Phase vorhandenen Menge an Butylglykol gelöst. Zusätzlich wurden 0,984 Gewichtsteile Butylglykol zugegeben, um den Lösemittelgehalt der organischen Phase auszugleichen. DP2 der wässrigen Phase wurden in 0,64 Gewichtsteile Butylglykol gelöst, wodurch auch der Lösemittelgehalt der wässrigen Phase ausgeglichen wurde.

### Wasserbasislack E3:

Zur Herstellung des erfindungsgemäßen Wasserbasislacks E3 wurde ein Lack analog der Herstellung des Wasserbasislacks 1 hergestellt, wobei anstelle des Polyesters P1 sowohl in der wässrigen Phase als auch in der organischen Phase DP3 eingesetzt wurde. DP3 wurde dabei zunächst in einem Drittel der in der organischen Phase vorhandenen Menge an Butylglykol gelöst. Zusätzlich wurden 0,984 Gewichtsteile Butylglykol zugegeben, um den Lösemittelgehalt der organischen Phase auszugleichen. DP3 der wässrigen Phase wurden in 0,64 Gewichtsteile Butylglykol gelöst, wodurch auch der Lösemittelgehalt der wässrigen Phase ausgeglichen wurde.

**Tabelle 1: Zusammensetzungen der Wasserbasislacke 1 und E1 bis E3**

| **WBL** | [**Gew**.**-%] Polymerfestkörper** | |
|---|---|---|
| 1 | 4,92 | P1 |
| E1 | 4,92 | DP1 |
| E2 | 4,92 | DP2 |
| E3 | 4,92 | DP3 |

Die Gewichtsprozentangaben in Tabelle 1 beziehen sich auf das Gesamtgewicht des Wasserbasislacks.

### Vergleich zwischen Wasserbasislack 1 und den Wasserbasislacken E1 bis E3

Zur Bestimmung der Stabilität gegen das Auftreten von Blasen und Quellungen nach Schwitzwasserlagerung wurden die Mehrschichtlackierungen nach der folgenden allgemeinen Vorschrift hergestellt:
Ein mit einer Standard-KTL (Cathoguard^{®} 800 der Firma BASF Coatings GmbH) beschichtetes Stahlblech der Abmessungen 10 x 20 cm wurde mit einem Standard-Füller (ALG 670173 - Füller mittelgrau der Firma Hemmelrath) beschichtet. Nach Zwischentrocknen des wässrigen Füllers über einen Zeitraum von 10 Minuten bei 80°C wurde der Füller bei einer Temperatur von 190°C über einen Zeitraum von 30 Minuten eingebrannt.

Der jeweilige Wasserbasislack gemäß Tabelle 1 wurde nun pneumatisch appliziert. Die resultierende Wasserbasislackschicht wurde 2 Minuten bei Raumtemperatur abgelüftet und anschließend während 10 Minuten im Umluftofen bei 70°C getrocknet.

Auf die getrocknete Wasserbasislackschicht wurde ein üblicher Zweikomponentenklarlack appliziert (Progloss^{®} 345 der Firma BASF Coatings GmbH). Die resultierende Klarlackschicht wurde während 20 Minuten bei Raumtemperatur abgelüftet. Anschließend wurden die Wasserbasislackschicht und die Klarlackschicht in einem Umluftofen während 30 Minuten bei 160°C gehärtet. Der vorliegende Aufbau stellt einen überbrannten Originalaufbau dar und wird im Weiteren als Originallackierung bezeichnet.

Diese Originallackierung wird mit einem Schleifpapier angeschliffen und anschließend der jeweilige Wasserbasislack gemäß Tabelle 1 auf diese angeschliffene Originallackierung pneumatisch appliziert. Die resultierende Wasserbasislackschicht wurde 2 Minuten bei Raumtemperatur abgelüftet und anschließend während 10 Minuten im Umluftofen bei 70°C getrocknet. Auf die getrocknete Wasserbasislackschicht wurde ein sogenannter 80°C-Zweikomponentenklarlack (FF230500 2K Reparaturklarlack, kratzfest der Firma BASF Coatings GmbH) aufgebracht. Die resultierende Klarlackschicht wurde während 20 Minuten bei Raumtemperatur abgelüftet. Anschließend wurden die Wasserbasislackschicht und die Klarlackschicht in einem Umluftofen während 30 Minuten bei 80°C gehärtet.

Die so behandelten Stahlbleche wurden nun über einen Zeitraum von 10 Tagen in einer Klimakammer nach Prüfklima CH nach DIN EN ISO 6270-2:2005-09 gelagert. Anschließend wurden die Bleche 24 Stunden nach Entnahme aus der Klimakammer visuell bezüglich Blasenbildung und Quellung untersucht.

Das Auftreten von Blasen wurde folgendermaßen durch eine Kombination von 2 Werten beurteilt:
- Die Anzahl der Blasen wurde durch eine Mengenangabe von 1 bis 5 bewertet, wobei mit m1 sehr wenige und m5 sehr viele Blasen bezeichnet wurden.
- Die Größe der Blasen wurde durch eine Größenangabe ebenfalls von 1 bis 5 bewertet, wobei mit g1 sehr kleine und g5 sehr große Blasen bezeichnet wurden.
- Die Bezeichnung m0g0 bedeutet demzufolge eine blasenfreie Lackierung nach Schwitzwasserlagerung und stellt bezüglich Blasenbildung ein iO-Ergebnis dar.

**Tabelle 2: Blasenbildung und Quellung von Wasserbasislack 1 und den Wasserbasislacken E1 bis E3**

| **WBL** | **Blasenbildung** | **Quellung** | **Beurteilung** |
|---|---|---|---|
| 1 | m5g1 | keine | niO |
| E1 | m0g0 | keine | iO |
| E2 | m0g0 | keine | iO |
| E3 | m0g0 | keine | iO |

| | | | |
|---|---|---|---|
| Erklärung: m = Anzahl an Blasen g = Größe der Blasen iO = zufriedenstellendes Ergebnis niO = nicht zufriedenstellendes Ergebnis | | | |

Die Ergebnisse bestätigen, dass bei Einsatz der erfindungsgemäßen Polyester keine Blasen nach Schwitzwasserbelastung mehr auftreten und keine Quellungen mehr sichtbar sind.

### 2. Herstellung eines silbernen Wasserbasislacks 2

Die in der Tabelle B unter "wässrige Phase" aufgeführten Komponenten wurden in der angegebenen Reihenfolge zu einer wässrigen Mischung zusammengerührt. Im nächsten Schritt wurde aus den unter "organische Phase" aufgeführten Komponenten eine organische Mischung hergestellt. Die organische Mischung wurde zur wässrigen Mischung hinzugegeben. Sodann wurde 10 Minuten lang gerührt und mit Hilfe von deionisiertem Wasser und Dimethylethanolamin auf einen pH Wert von 8 und eine Spritzviskosität von 58 mPas bei einer Scherbelastung von 1000 s⁻¹, gemessen mit einem Rotations-Viskosimeter (Gerät Rheomat RM 180 der Firma Mettler-Toledo) bei 23°C, eingestellt.

**Tabelle B:**

| Komponente | Gewichtsteile |
|---|---|
| **Wässrige Phase** | |
| 3%ige Na-Mg-Schichtsilikatlösung | 26 |
| Deionisiertes Wasser | 21,7 |
| Butylglykol | 2,8 |
| Polyurethanmodifiziertes Polyacrylat; hergestellt gemäß S. 7, Z. 55 bis S.8, Z. 23 der DE 4437535 A | 4,5 |
| 50 Gew.-%ige Lösung DSX 1550 (BASF) Rheologiemittel | 0,6 |
| P1 | 13,3 |
| Tetramethyldecindiol (Tensid der Firma BASF) | 0,3 |
| Melaminformaldehydharz (Cymel 203 von Cytec) | 4,1 |
| 10%iges Dimethylethanolamin in Wasser | 0,3 |
| Pfropfmischpolymerisat auf Polyurethanbasis; hergestellt gemäß S. 19, Z. 44 bis S. 20, Z. 21 der DE 19948004 A | 1,8 |
| Tetramethyldecindiol (Tensid der Firma BASF) | 1,6 |
| 3 Gew.-%ige wässrige Viscalex HV 30 Lösung; Rheologiemittel, erhältlich von BASF | 3,9 |
| **Organische Phase** | |
| Mischung zweier handelsüblicher Aluminiumpigmente, erhältlich von Firma Altana-Eckart | 6,2 |
| Butylglykol | 7,5 |
| P1 | 5 |

### Wasserbasislack E4:

Zur Herstellung des erfindungsgemäßen Wasserbasislacks E4 wurde ein Lack analog der Herstellung des Wasserbasislacks 2 hergestellt, wobei anstelle des Polyesters P1 sowohl in der wässrigen Phase als auch in der organischen Phase DP1 eingesetzt wurde. DP1 der organischen Phase wurde dabei zunächst in einem Drittel der in der organischen Phase vorhandenen Menge an Butylglykol gelöst. Zusätzlich wurde 1 Gewichtsteil Butylglykol zur organischen Phase zugegeben, um den Lösemittelbestandteil auszugleichen. DP1 der wässrigen Phase wurde in 2,66 Gewichtsteile Butylglykol gelöst, wodurch auch der Lösemittelgehalt der wässrigen Phase ausgeglichen wurde.

### Wasserbasislack E5:

Zur Herstellung des erfindungsgemäßen Wasserbasislacks E5 wurde ein Lack analog der Herstellung des Wasserbasislacks 2 hergestellt, wobei anstelle des Polyesters P1 sowohl in der wässrigen Phase als auch in der organischen Phase DP2 eingesetzt wurde. DP2 der organischen Phase wurde dabei zunächst in einem Drittel der in der organischen Phase vorhandenen Menge an Butylglykol gelöst. Zusätzlich wurde 1 Gewichtsteil Butylglykol zur organischen Phase zugegeben, um den Lösemittelbestandteil auszugleichen. DP2 der wässrigen Phase wurde in 2,66 Gewichtsteile Butylglykol gelöst, wodurch auch der Lösemittelgehalt der wässrigen Phase ausgeglichen wurde.

### Wasserbasislack E6:

Zur Herstellung des erfindungsgemäßen Wasserbasislacks E6 wurde ein Lack analog der Herstellung des Wasserbasislacks 2 hergestellt, wobei anstelle des Polyesters P1 sowohl in der wässrigen Phase als auch in der organischen Phase DP3 eingesetzt wurde. DP3 der organischen Phase wurde dabei zunächst in einem Drittel der in der organischen Phase vorhandenen Menge an Butylglykol gelöst. Zusätzlich wurde 1 Gewichtsteil Butylglykol zur organischen Phase zugegeben, um den Lösemittelbestandteil auszugleichen. DP3 der wässrigen Phase wurde in 2,66 Gewichtsteile Butylglykol gelöst, wodurch auch der Lösemittelgehalt der wässrigen Phase ausgeglichen wurde.

**Tabelle 3: Zusammensetzungen der Wasserbasislacke 2 und E4 bis E6**

| **WBL** | [**Gew.-%] Polymerfestkörper** | |
|---|---|---|
| 2 | 10,98 | P1 |
| E4 | 10,98 | DP1 |
| E5 | 10,98 | DP2 |
| E6 | 10,98 | DP3 |

Die Gewichtsprozentangaben in Tabelle 3 beziehen sich auf das Gesamtgewicht des Wasserbasislacks.

### Vergleich zwischen Wasserbasislack 2 und den Wasserbasislacken E4 bis E6

Zur Bestimmung der Stabilität gegen das Auftreten von Blasen und Quellungen nach Schwitzwasserlagerung wurden die Mehrschichtlackierungen nach der folgenden allgemeinen Vorschrift hergestellt:
Ein mit einer Standard-KTL (Cathoguard^{®} 800 der Firma BASF Coatings GmbH) beschichtetes Stahlblech der Abmessungen 10 x 20 cm wurde mit einem Standard-Füller (ALG 670173 - Füller mittelgrau der Firma Hemmelrath) beschichtet. Nach Zwischentrocknen des wässrigen Füllers über einen Zeitraum von 10 Minuten bei 80°C wurde der Füller bei einer Temperatur von 190°C über einen Zeitraum von 30 Minuten eingebrannt.

Der jeweilige Wasserbasislack gemäß Tabelle 3 wurde nun pneumatisch appliziert. Die resultierende Wasserbasislackschicht wurde 2 Minuten bei Raumtemperatur abgelüftet und anschließend während 10 Minuten im Umluftofen bei 70°C getrocknet. Auf die getrocknete Wasserbasislackschicht wurde ein üblicher Zweikomponentenklarlack appliziert (Progloss^{®} 345 der Firma BASF Coatings GmbH). Die resultierende Klarlackschicht wurde während 20 Minuten bei Raumtemperatur abgelüftet. Anschließend wurden die Wasserbasislackschicht und die Klarlackschicht in einem Umluftofen während 30 Minuten bei 160°C gehärtet. Der vorliegende Aufbau stellt einen überbrannten Originalaufbau dar und wird im Weiteren als Originallackierung bezeichnet.

Diese Originallackierung wird mit einem Schleifpapier angeschliffen und anschließend der jeweilige Wasserbasislack gemäß Tabelle 3 auf diese angeschliffene Originallackierung pneumatisch appliziert. Die resultierende Wasserbasislackschicht wurde 2 Minuten bei Raumtemperatur abgelüftet und anschließend während 10 Minuten im Umluftofen bei 70°C getrocknet. Auf die getrocknete Wasserbasislackschicht wurde ein sogenannter 80°C-Zweikomponentenklarlack (FF230500 2K Reparaturklarlack, kratzfest der Firma BASF Coatings GmbH) aufgebracht. Die resultierende Klarlackschicht wurde während 20 Minuten bei Raumtemperatur abgelüftet. Anschließend wurden die Wasserbasislackschicht und die Klarlackschicht in einem Umluftofen während 30 Minuten bei 80°C gehärtet.

Die so behandelten Stahlbleche wurden nun über einen Zeitraum von 10 Tagen in einer Klimakammer nach Prüfklima CH nach DIN EN ISO 6270-2:2005-09 gelagert. Anschließend wurden die Bleche 24 Stunden nach Entnahme aus der Klimakammer visuell bezüglich Blasenbildung und Quellung untersucht.

Das Auftreten von Blasen wurde folgendermaßen durch eine Kombination von 2 Werten beurteilt:
- Die Anzahl der Blasen wurde durch eine Mengenangabe von 1 bis 5 bewertet, wobei mit m1 sehr wenige und m5 sehr viele Blasen bezeichnet wurden.
- Die Größe der Blasen wurde durch eine Größenangabe ebenfalls von 1 bis 5 bewertet, wobei mit g1 sehr kleine und g5 sehr große Blasen bezeichnet wurden.
- Die Bezeichnung m0g0 bedeutet demzufolge eine blasenfreie Lackierung nach Schwitzwasserlagerung und stellt bezüglich Blasenbildung ein iO-Ergebnis dar.

**Tabelle 4: Blasenbildung und Quellung von Wasserbasislack 2 und den Wasserbasislacken E4 bis E6**

| **WBL** | **Blasenbildung** | **Quellung** | **Beurteilung** |
|---|---|---|---|
| 2 | m5g4 | keine | niO |
| E4 | m0g0 | keine | iO |
| E5 | m0g0 | keine | iO |
| E6 | m0g0 | keine | iO |

| | | | |
|---|---|---|---|
| Erklärung: m = Anzahl an Blasen g = Größe der Blasen iO = zufriedenstellendes Ergebnis niO = nicht zufriedenstellendes Ergebnis | | | |

Die Ergebnisse bestätigen, dass bei Einsatz der erfindungsgemäßen Polyester keine Blasen nach Schwitzwasserbelastung mehr auftreten und keine Quellungen mehr sichtbar sind.

## Patentansprüche

1. Dimerfettsäure-Polyesterdiol-Reaktionsprodukt, herstellbar durch Umsetzung von
(a) Dimerfettsäuren mit
(b) mindestens einem Polyesterdiol der allgemeinen Strukturformel (I) 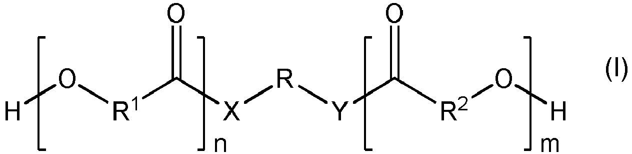 wobei
R für einen divalenten organischen Rest umfassend 2 bis 10 Kohlenstoffatome steht,
R¹und R² unabhängig voneinander für geradkettige oder verzweigte Alkylenreste mit 2 bis 10 Kohlenstoffatomen stehen,
X und Y unabhängig voneinander für O, S oder NR³ stehen, worin R³ für Wasserstoff oder einen Alkylrest mit 1 bis 6 Kohlenstoffatomen steht, und
m und n entsprechend so gewählt sind, dass das Polyesterdiol ein zahlenmittleres Molekulargewicht von 450 bis 2200 g/mol besitzt,
wobei die Komponenten (a) und (b) in einem molaren Verhältnis von 0,7/2,3 bis 1,3/1,7 eingesetzt werden und das resultierende Dimerfettsäure-Polyesterdiol-Reaktionsprodukt ein zahlenmittleres Molekulargewicht von 1200 bis 5000 g/mol und eine Säurezahl < 10 mg KOH/g besitzt.

2. Dimerfettsäure-Polyesterdiol-Reaktionsprodukt gemäß Anspruch 1, **dadurch gekennzeichnet, dass** die Dimerfettsäuren zu mindestens 90 Gew.-% aus dimeren Molekülen, weniger als 5 Gew.-% aus trimeren Molekülen und zu weniger als 5 Gew.-% aus monomeren Molekülen und sonstigen Nebenprodukten bestehen.

3. Dimerfettsäure-Polyesterdiol-Reaktionsprodukt nach Anspruch 1 oder 2, **dadurch gekennzeichnet, dass** die Dimerfettsäuren aus Linolen-, Linol- und/oder Ölsäure hergestellt werden und zu ≥ 98 Gew.-% aus dimeren Molekülen, ≤1,5 Gew.-% aus trimeren Molekülen und zu ≤ 0,5 Gew.-% aus monomeren Molekülen und sonstigen Nebenprodukten bestehen.

4. Dimerfettsäure-Polyesterdiol-Reaktionsprodukt nach mindestens einem der Ansprüche 1 bis 3, **dadurch gekennzeichnet, dass**
R für einen divalenten aliphatischen Rest umfassend 2 bis 6 Kohlenstoffatome steht,
R¹ und R² unabhängig voneinander für geradkettige oder verzweigte Alkylenreste mit 5 und/oder 6 Kohlenstoffatomen stehen,
X und Y unabhängig voneinander für O, NH stehen, und
m und n entsprechend so gewählt sind, dass das Polyesterdiol ein zahlenmittleres Molekulargewicht von 500 bis 1400 g/mol besitzt.

5. Dimerfettsäure-Polyesterdiol-Reaktionsprodukt nach mindestens einem der Ansprüche 1 bis 4, **dadurch gekennzeichnet, dass** die Komponenten (a) und (b) in einem molaren Verhältnis von 0,9/2,1 bis 1,1/1,9 eingesetzt werden.

6. Dimerfettsäure-Polyesterdiol-Reaktionsprodukt nach mindestens einem der Ansprüche 1 bis 5, **dadurch gekennzeichnet, dass** dieses ein zahlenmittleres Molekulargewicht von 1200 bis 4500 g/mol besitzt.

7. Dimerfettsäure-Polyesterdiol-Reaktionsprodukt nach mindestens einem der Ansprüche 1 bis 6, **dadurch gekennzeichnet, dass** dieses eine Säurezahl von < 5 mg KOH/g besitzt.

8. Pigmentierter wässriger Basislack, **dadurch gekennzeichnet, dass** er mindestens ein Dimerfettsäure-Polyesterdiol-Reaktionsprodukt nach mindestens einem der Ansprüche 1 bis 7 enthält.

9. Pigmentierter wässriger Basislack gemäß Anspruch 8, **dadurch gekennzeichnet, dass** die Summe über die gewichtsprozentualen Anteile aller Dimerfettsäure-Polyesterdiol-Reaktionsprodukte der Ansprüche 1 bis 7, bezogen auf das Gesamtgewicht des pigmentierten wässrigen Basislacks, 0,1 bis 30 Gew.-% beträgt.

10. Pigmentierter wässriger Basislack nach Anspruch 8 oder 9, **dadurch gekennzeichnet, dass** er als weiteres Bindemittel mindestens ein Polyurethanharz enthält.

11. Verwendung eines Dimerfettsäure-Polyesterdiol-Reaktionsprodukts gemäß einem oder mehreren der Ansprüche 1 bis 7 in pigmentierten wässrigen Basislacken zur Haftungsverbesserung.

12. Verfahren zur Herstellung einer mehrschichtigen Lackierung, bei dem
(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird,
**dadurch gekennzeichnet, dass** in Stufe (1) ein pigmentierter wässriger Basislack gemäß mindestens einem der Ansprüche 8 bis 10 eingesetzt wird.

13. Verfahren nach Anspruch 12, **dadurch gekennzeichnet, dass** es sich bei dem besagten Substrat aus Stufe (1) um eine Mehrschichtlackierung handelt, welche Fehlstellen besitzt.

14. Mehrschichtlackierung, herstellbar nach dem Verfahren gemäß Anspruch 12.

15. Verfahren nach Anspruch 13, **dadurch gekennzeichnet, dass** es sich bei der besagten Mehrschichtlackierung, welche Fehlstellen besitzt, um eine solche gemäß Anspruch 14 handelt.

## Claims

1. Dimer fatty acid/polyesterdiol reaction product preparable by reacting
(a) dimer fatty acids with
(b) at least one polyesterdiol of the general structural formula (I) 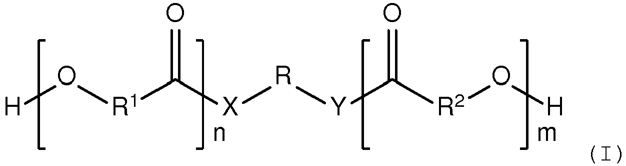 where
R is a divalent organic radical comprising 2 to 10 carbon atoms,
R¹ and R² independently of one another are straight-chain or branched alkylene radicals having 2 to 10 carbon atoms,
X and Y independently of one another are O, S or NR³, in which R³ is hydrogen or an alkyl radical having 1 to 6 carbon atoms, and
m and n are selected accordingly such that the polyesterdiol possesses a number-average molecular weight of 450 to 2200 g/mol,
where components (a) and (b) are used in a molar ratio of 0.7/2.3 to 1.3/1.7 and the resulting dimer fatty acid/polyesterdiol reaction product possesses a number-average molecular weight of 1500 to 5000 g/mol and an acid number < 10 mg KOH/g.

2. Dimer fatty acid/polyesterdiol reaction product according to Claim 1, **characterized in that** the dimer fatty acids consist of at least 90 wt% of dimeric molecules, less than 5 wt% of trimeric molecules, and less than 5 wt% of monomeric molecules and of other byproducts.

3. Dimer fatty acid/polyesterdiol reaction product according to Claim 1 or 2, **characterized in that** the dimer fatty acids are prepared from linolenic, linoleic and/or oleic acid and consist of ≥ 98 wt% of dimeric molecules, ≤ 1.5 wt% of trimeric molecules, and ≤ 0.5 wt% of monomeric molecules and of other byproducts.

4. Dimer fatty acid/polyesterdiol reaction product according to at least one of Claims 1 to 3, **characterized in that**
R is a divalent aliphatic radical comprising 2 to 6 carbon atoms,
R¹ and R² independently of one another are straight-chain or branched alkylene radicals having 5 and/or 6 carbon atoms,
X and Y independently of one another are O or NH, and
m and n are selected accordingly such that the polyesterdiol possesses a number-average molecular weight of 500 to 1400 g/mol.

5. Dimer fatty acid/polyesterdiol reaction product according to at least one of Claims 1 to 4, **characterized in that** components (a) and (b) are used in a molar ratio of 0.9/2.1 to 1.1/1.9.

6. Dimer fatty acid/polyesterdiol reaction product according to at least one of Claims 1 to 5, **characterized in that** it possesses a number-average molecular weight of 1200 to 4500 g/mol.

7. Dimer fatty acid/polyesterdiol reaction product according to at least one of Claims 1 to 6, **characterized in that** it possesses an acid number of < 5 mg KOH/g.

8. Pigmented aqueous basecoat material, **characterized in that** it comprises at least one dimer fatty acid/polyesterdiol reaction product according to at least one of Claims 1 to 7.

9. Pigmented aqueous basecoat material according to Claim 8, **characterized in that** the sum total of the weight-percentage fractions of all dimer fatty acid/polyesterdiol reaction products of Claims 1 to 7, based on the total weight of the pigmented aqueous basecoat material, is 0.1 to 30 wt%.

10. Pigmented aqueous basecoat material according to Claim 8 or 9, **characterized in that** it comprises as further binder at least one polyurethane resin.

11. Use of a dimer fatty acid/polyesterdiol reaction product according to one or more of Claims 1 to 7 in pigmented aqueous basecoat materials for improving adhesion.

12. Method for producing a multiple-coat paint system, where
(1) a pigmented aqueous basecoat material is applied to a substrate,
(2) a polymer film is formed from the coating material applied in stage (1),
(3) a clearcoat material is applied to the resulting basecoat film, and subsequently
(4) the basecoat film is cured together with the clearcoat film,
**characterized in that** a pigmented aqueous basecoat material according to at least one of Claims 8 to 10 is used in stage (1).

13. Method according to Claim 12, **characterized in that** said substrate from stage (1) is a multicoat paint system which possesses defects.

14. Multicoat paint system producible by the method according to Claim 12.

15. Method according to Claim 13, **characterized in that** said multicoat paint system which possesses defects is a paint system according to Claim 14.

## Revendications

1. Produit de réaction acide gras dimère-polyesterdiol, pouvant être fabriqué par mise en réaction de
(a) des acides gras dimères avec
(b) au moins un polyesterdiol de formule structurale générale (I) 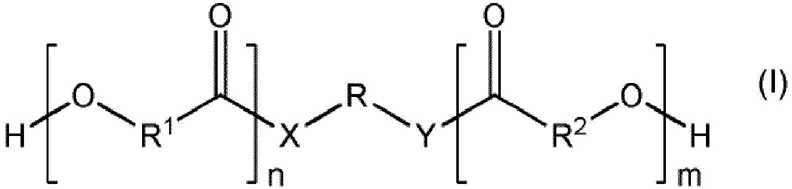 dans laquelle
R représente un radical organique bivalent comprenant 2 à 10 atomes de carbone,
R¹ et R² représentent indépendamment l'un de l'autre des radicaux alkylène linéaires ou ramifiés de 2 à 10 atomes de carbone,
X et Y représentent indépendamment l'un de l'autre 0, S ou NR³, R³ représentant l'hydrogène ou un radical alkyle de 1 à 6 atomes de carbone, et
m et n étant choisis de sorte que le polyesterdiol présente un poids moléculaire moyen en nombre de 450 à 2 200 g/mol,
les composants (a) et (b) étant utilisés en un rapport molaire de 0,7/2,3 à 1,3/1,7, et le produit de réaction acide gras dimère-polyesterdiol résultant présentant un poids moléculaire moyen en nombre de 1 200 à 5 000 g/mol et un indice d'acidité < 10 mg KOH/g.

2. Produit de réaction acide gras dimère-polyesterdiol selon la revendication 1, **caractérisé en ce que** les acides gras dimères sont constitués d'au moins 90 % en poids de molécules dimères, de moins de 5 % en poids de molécules trimères et de moins de 5 % en poids de molécules monomères et d'autres produits secondaires.

3. Produit de réaction acide gras dimère-polyesterdiol selon la revendication 1 ou 2, **caractérisé en ce que** les acides gras dimères sont fabriqués à partir d'acide linolénique, linoléique et/ou oléique, et sont constitués de ≥ 98 % en poids de molécules dimères, de ≤ 1,5 % en poids de molécules trimères et de ≤ 0,5 % en poids de molécules monomères et d'autres produits secondaires.

4. Produit de réaction acide gras dimère-polyesterdiol selon au moins l'une quelconque des revendications 1 à 3, **caractérisé en ce que**
R représente un radical aliphatique bivalent comprenant 2 à 6 atomes de carbone,
R¹ et R² représentent indépendamment l'un de l'autre des radicaux alkylène linéaires ou ramifiés comprenant 5 et/ou 6 atomes de carbone,
X et Y représentent indépendamment l'un de l'autre O, NH, et
m et n sont choisis de sorte que le polyesterdiol présente un poids moléculaire moyen en nombre de 500 à 1 400 g/mol.

5. Produit de réaction acide gras dimère-polyesterdiol selon au moins l'une quelconque des revendications 1 à 4, **caractérisé en ce que** les composants (a) et (b) sont utilisés en un rapport molaire de 0,9/2,1 à 1,1/1,9.

6. Produit de réaction acide gras dimère-polyesterdiol selon au moins l'une quelconque des revendications 1 à 5, **caractérisé en ce que** celui-ci présente un poids moléculaire moyen en nombre de 1 200 à 4 500 g/mol.

7. Produit de réaction acide gras dimère-polyesterdiol selon au moins l'une quelconque des revendications 1 à 6, **caractérisé en ce que** celui-ci présente un indice d'acidité < 5 mg KOH/g.

8. Vernis de base aqueux pigmenté, **caractérisé en ce qu'**il contient au moins un produit de réaction acide gras dimère-polyesterdiol selon au moins l'une quelconque des revendications 1 à 7.

9. Vernis de base aqueux pigmenté selon la revendication 8, **caractérisé en ce que** la somme des proportions en pourcentage en poids de tous les produits de réaction acide gras dimère-polyesterdiol selon les revendications 1 à 7, par rapport au poids total du vernis de base aqueux pigmenté, est de 0,1 1 à 30 % en poids.

10. Vernis de base aqueux pigmenté selon la revendication 8 ou 9, **caractérisé en ce qu'**il contient en tant que liant supplémentaire au moins une résine de polyuréthane.

11. Utilisation d'un produit de réaction acide gras dimère-polyesterdiol selon une ou plusieurs des revendications 1 à 7 dans des vernis de base aqueux pigmentés pour améliorer l'adhérence.

12. Procédé de fabrication d'un vernissage multicouche, selon lequel
(1) un vernis de base aqueux pigmenté est appliqué sur un substrat,
(2) un film polymère est formé à partir du vernis appliqué à l'étape (1),
(3) un vernis transparent est appliqué sur la couche de vernis de base ainsi obtenue, puis
(4) la couche de vernis de base est durcie conjointement avec la couche de vernis transparent, **caractérisé en ce qu'**un vernis de base aqueux pigmenté selon au moins l'une quelconque des revendications 8 à 10 est utilisé à l'étape (1).

13. Procédé selon la revendication 12, **caractérisé en ce que** ledit substrat à l'étape (1) est un vernissage multicouche qui présente des défauts.

14. Vernissage multicouche, pouvant être fabriqué par le procédé selon la revendication 12.

15. Procédé selon la revendication 13, **caractérisé en ce que** ledit vernissage multicouche qui présente des défauts est un tel vernissage selon la revendication 14.
